# EUROPÄISCHE PATENTANMELDUNG

(11) **EP 2 256 889 A2**
(43) Veröffentlichungstag der Anmeldung: **01.12.2010**
(21) Anmeldenummer: 10164133.0
(22) Anmeldetag: 27.05.2010
(51) Int. Cl.: H02G 3/04, H02G 3/12, H02G 3/18

(54) **Modulare Einbaudose**

(30) Priorität: 27.05.2009 DE 102009026515
(71) Anmelder: Hoff, Alwin, 55124 Mainz (DE)
(72) Erfinder: Hoff, Alwin, 55124 Mainz (DE)
(74) Vertreter: WSL Patentanwälte

(57) **Zusammenfassung**

Die vorliegende Erfindung betrifft eine modulare Einbaudose als Auslass für Anschlussleitungen aus einem flächigen Konstruktionselement. Gegenüber den aus dem Stand der Technik bekannten Einbaudosen ist es Aufgabe der vorliegenden Erfindung eine Einbaudose bereitzustellen, die sich durch eine Modularität auszeichnet und die es einem Bauherrn ermöglicht ein Gebäude an allen Punkten mit einem einzigen Typ von Dose zu bestücken und erst nachträglich zu entscheiden welche Funktionalität die einzelnen Auslässe aufweisen sollen. Zur Lösung dieser Aufgabe wird erfindungsgemäß vorgeschlagen, eine Einbaudose als Auslass für Anschlussleitungen aus einem flächigen Konstruktionselement bereitzustellen, mit einem im Wesentlichen hohlzylindrischen Gehäuse, das eine Gehäuseinnenwand, eine Gehäuseaußenwand, ein erstes Ende und ein zweites Ende aufweist, wobei an der Gehäuseinnenwand ein in radialer Richtung gegenüber der Gehäuseinnenwand nach Innen vorspringender erster Aufnahmeabschnitt zur Aufnahme eines mechanischen Verbindungselements für einen Energieverteiler und/oder eine Führungshülse für einen Deckel vorgesehen ist, wobei an dem ersten Ende der Einbaudose an der Gehäuseaußenwand ein im Wesentlichen ringförmiger in radialer Richtung gegenüber der Gehäuseaußenwand nach Außen vorspringender Abdeckabschnitt vorgesehen ist, der im eingebauten Zustand der Einbaudose das flächige Konstruktionselement abschnittsweise überdeckt, und wobei an dem Gehäuse eine Mehrzahl von Aufnahmen für eine Mehrzahl von Spannkrallen vorgesehen sind, mit denen die Einbaudose an einem plattenförmigen Materialabschnitt, in welchem die Einbaudose aufnehmbar ist, festspannbar ist. Die erfindungsgemäße Einbaudose ist insbesondere für den Einbau in Doppelböden, Hohlraumböden, einen schwimmenden Estrich, Hohlwände und angehängten Decken geeignet

## Beschreibung

Die vorliegende Erfindung betrifft eine modulare Einbaudose als Auslass für Anschlussleitungen aus einem flächigen Konstruktionselement.

Moderne Arbeitsplätze erfordern Telekommunikations- und Stromversorgungsanschlüsse in unmittelbarer Nähe des Arbeitsplatzes, um den Anschluss elektrisch betriebener Arbeitsmittel wie z.B. einem PC, eine Anbindung an Datennetze, insbesondere an ein lokales Netzwerk (LAN) und das Internet, sowie eine Raum- und Mediensteuerung zu gewährleisten.

In vielen Bereichen der Wirtschaft haben sich Großraumbüros durchgesetzt. Diese ermöglichen insbesondere eine hohe Flexibilität bei der Anordnung der einzelnen Arbeitsplätze. Während Schreibtische und Stühle leicht verrückt werden können, gilt es gleichzeitig ein System bereitzustellen, das es ermöglicht Anschlüsse für Strom und/oder Netzwerk je nach Nutzung der Fläche an unterschiedlichen Stellen im Raum anzuordnen. Viele Büroflächen verfügen daher heute über Doppelböden oder Hohlraumböden, bei denen zwischen dem Rohboden, d.h. der tragenden Geschoßdecke des Gebäudes, und den begehbaren Bodenplatten (bei einem Doppelboden) oder den Estrich (bei einem Hohlraumboden) ein Zwischenraum vorgesehen ist, in den Kabeltrassen, Abgänge und sonstige Installationen eingebracht werden können.

An festgelegten, vorzugsweise in einem bestimmten Raster angeordneten Punkten sind dann Abgangsstellen für die Energie- und Datenversorgung in Form von Bodentanks und Sockeln für verschiedene Typen von Energieverteilern vorgesehen. Diese Abgangspunkte sind in der Regel ausschließlich mit dem Estrich oder den Bodenplatten verbunden, um einen Kraftschluß zwischen der Bodenplatte oder dem Estrich und dem Rohboden zu verhindern, da die Verlegung des Estrichs bzw. der Bodenplatten schwimmend zum Rest des Gebäudes erfolgt.

Beispielsweise ist aus der DE 20 2006 004 768 U1 ein Bajonettverschluß zur Verbindung einer Energiesäule, welche herkömmliche Steckdosen trägt, mit einem entsprechenden Sockel als Abgangspunkt in einem Doppel- oder Hohlraumboden bekannt.

Aus der DE 20 2007 012 037 U1 ist eine Auslassdose bekannt, der mit Hilfe von Bohrungen in seinem Schulterlager mit dem Estrich oder einer Bodenplatte verschraubt werden kann.

Aus der DE 20 2008 006 092 U1 ist weiterhin ein Sockel bekannt, der über einen Standkranz unmittelbar mit dem Rohboden verbindbar ist und der daher zum Einleiten großer Momente, wie sie beispielsweise von Stehlampen, die in einem solchen Bodentank aufgenommen sind, bewirkt werden, in den Rohboden einleitet.

Als Nachteil erweist es sich bei den aus dem Stand der Technik bekannten Einbaudosen, dass diese jeweils nur für eine einzige Anwendung zugeschnitten sind und unterschiedliche Anwendungsfälle solcher Bodentanks unterschiedliche Typen in Tanks erfordern. So muss ein Bauherr, der plant möglicherweise zu irgendeinem Zeitpunkt nach Fertigstellung seines Gebäudes einen Teil der von den Bodentanks gebildeten Abgänge mit sogenannten Energiesäulen zu bestücken Sockel beschaffen, die entsprechende Aufnahmen für die Energiesäulen aufweisen. Gerade solche Aufnahmen für die Sockel stellen einen erheblichen Kostenfaktor der Bodentanks dar, der bei den aus dem Stand der Technik bekannten Tanks auch an den Stellen entsteht, an denen später keine oder nur eine beschränkte Funktionalität der Tanks genutzt wird, ohne jemals deren Energiesäulen aufzunehmen.

Demgegenüber ist es Aufgabe der vorliegenden Erfindung eine Einbaudose bereitzustellen, die sich durch eine Modularität auszeichnet und die es einem Bauherrn ermöglicht zunächst ein Gebäude an allen Punkten, an denen zu irgendeinem Zeitpunkt ein Auslass für Anschlussleitungen oder ein Sockel für eine Energiesäule bereitgestellt werden soll, mit einem einzigen Typ von Dose zu bestücken und erst nachträglich, beispielsweise bei Einzug eines Mieters, zu entscheiden welche Funktionalität die einzelnen Auslässe aufweisen sollen.

Diese Aufgabe wird erfindungsgemäß durch eine Einbaudose als Auslass für Anschlussleitungen aus einem flächigen Konstruktionselement gelöst, mit einem im Wesentlichen hohlzylindrischen Gehäuse, das eine Gehäuseinnenwand, eine Gehäuseaußenwand, ein erstes Ende und ein zweites Ende aufweist, wobei an der Gehäuseinnenwand ein in radialer Richtung gegenüber der Gehäuseinnenwand nach Innen vorspringender erster Aufnahmeabschnitt zur Aufnahme eines mechanischen Verbindungselements für einen Energieverteiler und/oder eine Führungshülse für einen Deckel vorgesehen ist, wobei an dem ersten Ende der Einbaudose an der Gehäuseaußenwand ein im Wesentlichen ringförmiger in radialer Richtung gegenüber der Gehäuseaußenwand nach Außen vorspringender Abdeckabschnitt vorgesehen ist, der im eingebauten Zustand der Einbaudose das flächige Konstruktionselement abschnittsweise überdeckt, und wobei an dem Gehäuse eine Mehrzahl von Aufnahmen für eine Mehrzahl von Spannkrallen vorgesehen sind, mit denen die Einbaudose an einem plattenförmigen Materialabschnitt, in welchem die Einbaudose aufnehmbar ist, festspannbar ist.

Die Einbaudose im Sinne der vorliegenden Erfindung kann in einen Hohlraum- oder Doppelboden eingebaut werden, bei welchem die Einbaudose in eine Bodenplatte oder den Estrich, welche das flächige Konstruktionselement im Sinne der vorliegenden Anmeldung bilden, eingelassen wird. Alternativ kann die Einbaudose aber auch in Möbel eingebaut werden (hier ist das flächige Konstruktionselement beispielsweise eine Holzplatte des Möbelstücks) oder im klassischem Trockenbau Verwendung finden (hier ist das flächige Konstruktionselement, in welches die Einbaudose eingelassen wird, beispielsweise eine Gipsplatte).

Die Ausgestaltung des hohlzylindrischen Gehäuses mit nur drei wesentlichen Elementen, nämlich dem ersten Aufnahmeabschnitt, dem Abdeckabschnitt sowie einer Mehrzahl von Aufnahmen für Spannkrallen ermöglicht es, die Einbaudose in großen Stückzahlen zu einem günstigen Preis anzubieten, der es dem Bauherrn gestattet, auch große Flächen flächendeckend mit den erfindungsgemäßen Einbaudosen auszugestalten, ohne dass er sich vorab bereits auf eine Funktionalität und die damit verbundene kostenintensive Bestückung der einzelnen Einbaudosen festlegen müsste.

Der ringförmige in radialer Richtung gegenüber der Gehäuseaußenwand nach außen vorspringende Abdeckabschnitt ermöglicht ein paßgenaues Einlassen in das flächige Konstruktionselement, so dass insbesondere Abstände zwischen dem flächigen Konstruktionselement und der Gehäuseaußenwand der Einbaudose abgedeckt werden.

Dabei weist der Abdeckabschnitt vorzugsweise eine untere Auflagefläche auf, die mit einer das Gehäuse ringförmig umgebenden Dichtung versehen ist, um eine Abdichtung des Abdeckabschnitts gegen das flächige Konstruktionselement zu ermöglichen, was wiederum die Einbaudose für den Einbau in naßgereinigten Räume geeignet macht.

Darüber hinaus kann der Abdeckabschnitt für Anwendungen, bei denen die Einbaudose fest mit dem flächigen Konstruktionselement verbunden wird, als Widerlager dienen, wobei in einem solchen Fall in den Aufnahmen für die Spannkrallen eine Mehrzahl von Spannkrallen angeordnet sind, welche das flächige Konstruktionselement, in das die Einbaudose eingelassen ist, gegen den Abdeckabschnitt drücken. Aus dem Stand der Technik ist dazu eine Vielzahl von möglichen Spannkrallen bekannt, in einer Aufnahme, so wie sie die erfindungsgemäße Einbaudose vorsieht, aufgenommen werden können. Insbesondere sind solche Einbaukrallen geeignet, die sich vor dem Einbau so einschieben, verschwenken oder abklappen lassen, dass die Krallen das Außenmaß, d.h. den Durchmesser der Gehäuseaußenwand des hohlzylindrischen Gehäuses nicht übersteigen und erst nach Einbringen der Einbaudose in das flächige Konstruktionsmaterial so angeordnet werden können, dass sie über den Außendurchmesser der Gehäuseaußenwand vorstehen.

Soll aber die erfindungsgemäße Einbaudose als Sockelelement verwendet werden, so können die Aufnahmen für die Spannkrallen unbestückt bleiben, wodurch die Kosten für die Dose reduziert werden. Die Einbaudose wird dann über den erfindungsgemäß vorgesehenen ersten Aufnahmeabschnitt am Gehäuse und ein gegebenenfalls mit diesem verbundenen Element mit einem Standkranz verbunden, der wiederum fest mit dem Rohboden des Gebäudes verbindbar ist, beispielsweise durch Verschrauben.

Alternativ zur Verbindung des Standkranzes mit dem Rohboden eines Gebäudes kann dieser auch mit der Rohdecke des Gebäudes verbunden, insbesondere verschraubt, werden, um die erfindungsgemäße Einbaudose in einer abgehängte Decke zu installieren und an dieser beispielsweise von oben in einen Raum hineinragende Energiesäulen aufzunehmen.

Unter der Voraussetzung, dass das flächige Konstruktionselement, in welches die Einbaudose eingelassen wird, eine ausreichende Festigkeit und Steifigkeit aufweist, kann die erfindungsgemäße Einbaudose auch als Sockelelement, beispielsweise zur Aufnahme einer Leuchte, verwendet werden, ohne dass die Einbaudose über einen Standkranz mit dem Rohboden verbunden werden müsste.

In einem solchen Fall ist eine Ausführungsform der Einbaudose zweckmäßig, die eine Mehrzahl von sich in radialer Richtung erstreckenden Durchgangsbohrungen zur Aufnahme je einer Befestigungsschraube in dem hohlzylindrischen Gehäuse aufweist, wobei die Durchgangsbohrungen vorzugsweise einen Winkel ungleich 90° mit der Zylinderachse des Gehäuses einschließen.

Die meisten Bodenbeläge, die auf das flächige Konstruktionselement, insbesondere eine Bodenplatte oder einen Estrich, aufgebracht werden, erlauben es, mit den mit der Einbaudose verbundenen Spannkrallen eine ausreichende Verbindung der Einbaudose mit der Bodenplatte oder dem Estrich, bereitzustellen, wenn die Einbaudose beispielsweise ausschließlich als Bodentank zum Herausführen von Kabeln auf einem Doppelboden verwendet werden soll.

Bei der Aufnahme von Energiesäulen und Leuchten treten jedoch derart große Momente auf, welche in die Bodenplatte oder den Estrich eingeleitet werden müssen, dass es zu einer Verformung des Bodenbelags kommen kann, so dass die Säule bzw. Leuchte dann schief steht und/oder wackelt. Darüber hinaus kommt es insbesondere bei hochflorigen Teppichbelägen mit der Zeit zu einem unkontrollierten Zusammendrücken des Belags, so dass sich die Spannkrallen lösen. Dies kann effektiv dadurch verhindert werden, dass die Einbaudose mit Hilfe der zuvor beschriebenen, sich im wesentlichen in radialer Richtung durch das Gehäuse der Einbaudose erstreckenden Durchgangsbohrungen mit der Doppelbodenplatte oder dem Estrich verschraubt wird. Die auftretenden Momente werden dann von den in die Durchgangsbohrung eingreifenden Schrauben von der Einbaudose in den Estrich bzw. die Bodenplatte eingeleitet.

In Ausführungsformen, bei denen an der Einbaudose Spannkrallen aufgenommen und diese gegen die Doppelbodenplatte oder den Estrich verspannt sind, dienen die Schrauben als Widerlager für die Spannkrallen. Eine Verformung des Bodenbelags, insbesondere Teppichbodens, zwischen dem Abdeckabschnitt der Einbaudose und der Doppelbodenplatte oder dem Estrich hat dann keinen Einfluss mehr auf die Stabilität der Verankerung der Einbaudose im Boden. In einer solchen Ausführungsform wird zunächst die Dose durch Anziehen der Spannkrallen ausgerichtet und fixiert. Die Schrauben werden erst nachfolgend zur Stabilisierung und als Widerlager eingedreht.

Bevorzugt wird die Einbaudose mit Hilfe von Abstandsschrauben mit dem flächigen Konstruktionselement, in welchem die Einbaudose aufgenommen ist, verschraubt.

Bei einer Ausführungsform der Einbaudose sind die Durchgangsbohrungen in dem hohlzylindrischen Gehäuse Gewindebohrungen. Alternativ können jedoch auch selbstschneidende Schrauben verwendet werden, welche die erforderlichen Gewindegänge in den Durchgangsbohrungen des Gehäuses selbst erzeugen.

In einer weiteren Ausführungsform wird die erfindungsgemäße Einbaudose in Kombination mit einem mit einem flächigen Konstruktionselement verbindbaren und die Einbaudose konzentrisch umgebenden Dübel und einer Mehrzahl von Abstandsschrauben verwendet, wobei die Abstandsschrauben in die Durchgangsbohrungen des Gehäuses und in den Dübel eingreifen und so die Einbaudose mit dem Dübel verschrauben.

Dabei wird unter einem Dübel im Sinne der vorliegenden Anmeldung ein Element, vorzugsweise aus Kunststoff, verstanden, welches einen Schraubgrund für die mit dem flächigen Konstruktionselement zu verbindenden Schrauben bildet. In einer Ausführungsform ist der Dübel so ausgestaltet, dass er eine Verzahnung mit dem ihn umgebenden Konstruktionselement bereitstellt. Dazu ist es zweckmäßig, wenn der Dübel bereits bei der Herstellung des flächigen Konstruktionselements mit dem Material des Konstruktionselements vergossen wird. In einer weiteren Ausführungsform dient dabei der Dübel als Schalungskörper zum Freihalten des Lochs oder Durchbruchs zur Aufnahme der Einbaudose bei der Herstellung des flächigen Konstruktionselements, insbesondere beim Gießen eines Nassestrichs oder beim Herstellen einer Öffnung im Hohlraumboden.

Unter einer Abstandsschraube im Sinne der vorliegenden Erfindung wird eine Schraube verstanden, deren Gewinde oder deren mehreren Gewinde eine solche axiale Ausdehnung aufweisen, dass das Gewinde sowohl mit dem Dübel als auch mit der Einbaudose in Eingriff tritt. Da die Steigung des Gewindes konstant ist bzw. die Mehrzahl von Gewinden die gleiche Steigung aufweisen, führt ein Verschrauben der Einbaudose mit dem erfindungsgemäßen konzentrischen Dübel nicht zu einem Verschieben oder Verspannen der Einbaudose im Einbauloch in radialer Richtung. So können die auf die Einbaudose einwirkende Momente über die Schrauben auf den Dübel übertragen und damit in die Doppelbodenplatte bzw. den Estrich eingeleitet werden.

In einer Ausführungsform der Erfindung ist der Dübel so ausgestaltet, dass er die Aufnahme einer Schraube in einer Mehrzahl von Positionen sowohl in axialer Richtung als auch in Umfangsrichtung ermöglicht. Während die Mehrzahl von möglichen Positionen in axialer Richtung dazu führt, dass der Abstand der Unterkante des Abdeckabschnitts der Einbaudose von der Oberkante des Estrichs bzw. der Bodenplatte zur Anpassung an unterschiedliche Bodenbeläge eingestellt werden kann, ermöglicht es die Mehrzahl von Positionen in Umfangsrichtung, die Einbaudose in einer Mehrzahl von Drehpositionen mit dem Dübel zu verschrauben.

Zentrales Element der erfindungsgemäßen Einbaudose ist der erste Aufnahmeabschnitt zur Aufnahme eines mechanischen Verbindungselements für einen Energieverteiler und/oder eine Führungshülse für einen Deckel. Erst dieser gegenüber der Gehäuseinnenwand nach innen vorspringende Aufnahmeabschnitt ermöglicht eine variable Bestückung der erfindungsgemäßen Einbaudose mit weiteren Elementen, die zum einen die Aufnahme von elektrischen Konnektoren ermöglichen, zum anderen aber Funktionalitäten bereitstellen, wie z.B. eine Deckelführung, ein mechanisches Verbindungselement zur Aufnahme eines Energieverteilers oder Ähnliches.

In einer Ausführungsform der Erfindung ist dieser Aufnahmeabschnitt am zweiten Ende der Einbaudose angeordnet, d.h. an dem dem Abdeckabschnitt gegenüberliegenden Ende der Einbaudose.

Wenn im Sinne der vorliegenden Anmeldung davon die Rede ist, dass ein Element am Ende der Einbaudose angeordnet ist, so ist damit gemeint, dass es sich deutlich näher an dem bezeichneten Ende befindet als an dem anderen. Ein Abstand von beispielsweise 5 mm und weniger vom tatsächlichen Ende des Gehäuses wird im Sinne dieser Anmeldung noch als am Ende angeordnet betrachtet.

Dabei ist es insbesondere aber zweckmäßig, wenn der erste Aufnahmeabschnitt so am zweiten Ende der Einbaudose angeordnet ist, dass er mit der Stirnseite des zweiten Endes des Gehäuses flächenbündig abschließt, d.h. abschnittsweise den Boden der Dose bzw. eine Deckelfläche des hohlzylindrischen Gehäuses bildet.

In dem ersten Aufnahmeabschnitt der Einbaudose sind in einer Ausführungsform der Erfindung Gewindebohrungen vorgesehen, die ein Verschrauben der an dem Aufnahmeabschnitt aufzunehmenden Elemente mit der Einbaudose ermöglichen.

Wird die erfindungsgemäße Einbaudose so bestückt, dass sie als Sockel für eine Energiesäule dienen kann, so muss die erfindungsgemäße Einbaudose die erforderliche Konnektivität innerhalb eines Außendurchmessers bereitstellen, der zu dem Außendurchmesser der Energiesäulen des Systems paßt, wobei dieser aus ästhetischen Gründen klein ist. Daher weist die erfindungsgemäße Einbaudose in einer Ausführungsform einen Durchmesser der Gehäuseaußenwand von weniger als 170 mm, vorzugsweise weniger als 160 mm und besonders bevorzugt weniger als 150 mm auf. Nur auf diese Weise lässt sich ein mechanischer und elektrischer Anschluss an Energiesäulen mit einem Außendurchmesser von 100 mm oder weniger realisieren.

Um auch eine Eignung der Einbaudose zum Einbinden in ein Estrichkanalsystem bereitzustellen, weist die erfindungsgemäße Einbaudose in eine Ausführungsform, vorzugsweise gleichzeitig zu dem beschriebenen geringen Durchmesser der Gehäuseaußenwand, eine Höhe des Gehäuses von weniger als 70 mm und besonders bevorzugt von 60 mm oder weniger auf. Dabei wird die Höhe zwischen der Stirnseite des Gehäuses an seinem zweiten Ende und der Auflagefläche des Abdeckabschnitts gemessen, wobei die Auflagefläche des Abdeckabschnitts bzw. deren Flächennormale in Richtung des zweiten Endes des Gehäuses zeigt.

In einer Ausführungsform der Erfindung ist an dem ersten Ende des Gehäuses eine Dichtungsaufnahme für eine Dichtung zur Abdichtung eines Deckels oder eines Energieverteilers gegenüber dem Gehäuse vorgesehen. Eine solche Dichtungsaufnahme ermöglicht den Einbau der erfindungsgemäßen Bodendose in naß zu reinigenden Böden, ohne dass die Gefahr besteht, dass Putzwasser in die Bodendose eindringt.

In einer Ausführungsform weist die Dichtungsaufnahme eine ringförmige Ausnehmung mit einer Dichtfläche in der Stirnseite des Gehäuses an dessen ersten Ende auf. In diese, zweckmäßigerweise U-förmige, Ausnehmung kann ein O-Ring, der an einem Deckel oder einem Energieverteiler aufgenommen ist, eingebracht und dichtend mit dem Gehäuse in Eingriff gebracht werden. In einer Ausführungsform dient die Dichtungsaufnahme auch als Ausnehmung in der Gehäusestirnseite, welche es ermöglicht einen Deckel flächenbündig mit der Oberseite des Abdeckabschnittes aufzunehmen.

In einer Ausführungsform der Erfindung weist das Gehäuse eine Deckelaufnahme für einen Verschlußdeckel auf, wobei die Deckelaufnahme vorzugsweise eine im Wesentlichen ringförmig umlaufende Nut in der Gehäuseinnenwand zur Aufnahme einer Rastnase ist. Eine derartige in das Gehäuse der Einbaudose integrierte Deckelaufnahme ermöglicht eine preiswerte Abdeckung der Einbaudose selbst dann, wenn diese unbestückt ist und noch keine Konnektivität oder anderweitige Funktionalität aufweist. Eine solche Ausgestaltung ermöglicht aber das einfache Herausführen von Kabeln aus einem Hohlraum- oder Doppelboden.

Eine einfache Ausgestaltung einer Deckelaufnahme kann aber auch dadurch realisiert sein, dass am ersten Ende des Gehäuses stirnseitig eine Mehrzahl von Ausnehmungen zur Aufnahme von mit einem Deckel verbundenen Rastnasen vorgesehen ist.

In einer bevorzugten Ausführungsform weist die erfindungsgemäße Einbaudose eine Führungshülse zum Führen und Halten eines Deckels auf, wobei die Führungshülse einen im Wesentlichen hohlzylindrischen Körper mit einer Außenwand, einer Innenwand, einem ersten Ende und einem zweiten Ende aufweist, der im Wesentlichen konzentrisch zu der Gehäuseinnenwand der Einbaudose angeordnet ist. Eine solche Führungshülse ermöglicht es, die erfindungsgemäße Einbaudose mit einem sogenannten Liftdeckel zu versehen, d.h. einem Deckel, der geführt an der Einbaudose aufgenommen ist und der sich nach oben aus einer die Einbaudose vollständig verschließenden Position in eine Position verschieben lässt, die ein Herausführen von Kabeln aus der Einbaudose ermöglicht. Das Vorsehen der Führungsfunktionalität für einen Deckel an einer Führungshülse, die ein gesondertes Element innerhalb des Gehäuses der Einbaudose darstellt, ermöglicht es, auch diese Funktionalität des Haltens und Führens eines Deckels modular auszugestalten, d.h. die Funktion nur dann zur Verfügung zu stellen, wenn sie von einem Benutzer auch gefordert wird.

In einer Ausführungsform der Erfindung ist in der Außenwand der Führungshülse mindestens eine sich im Wesentlichen parallel zur Zylinderachse erstreckende Führungsnut vorgesehen, die am ersten Ende des zylindrischen Körpers der Führungshülse in eine im Wesentlichen in Umfangsrichtung verlaufende Arretierungsnut mündet, so dass ein Führungsabschnitt mit mindestens einem Führungsvorsprung eines zu der Führungshülse komplementären Deckels in der Nut für eine Translationsbewegung in einer Richtung im Wesentlichen parallel zur Zylinderachse und in einer Verbindungsnut für eine Verschwenkbewegung um die Zylinderachse führbar ist.

In einer alternativen Ausführungsform kann die Gehäuseinnenwand eine Ausgestaltung mit Führungsnuten aufweisen, so wie sie zuvor für die Führungshülse beschrieben wurde, um eine entsprechende Führungsfunktion für einen Deckel bereitzustellen.

Ein zu der Führungshülse komplementärer Deckel kann von der Führungsnut geführt aus dem Gehäuse der erfindungsgemäßen Einbaudose herausgezogen und durch Verschwenken um die Zylinderachse in die Arretierungsnut arretiert werden. Wenn im Sinne der vorliegenden Anmeldung davon die Rede ist, dass die Führungsnut im Wesentlichen parallel zur Zylinderachse verläuft, so wird damit ein Verlauf bezeichnet, der ein Herausziehen des Deckels aus dem Gehäuse in Richtung der Zylinderachse ermöglicht, wobei beispielsweise auch ein schraubenförmiger Verlauf der Führungsnut entlang der Außenwand der Führungshülse noch in diesem Sinne im Wesentlichen parallel zur Zylinderachse ist.

Dabei weist die Führungshülse in einer bevorzugten Ausführungsform mindestens zwei in Umfangsrichtung voneinander beabstandete, sich im Wesentlichen parallel zur Zylinderachse erstreckende Führungsnuten auf, die am ersten Ende des zylindrischen Körpers der Führungshülse in die dort verlaufende Arretierungsnut münden. In einer Ausführungsform weist die Führungshülse zwei Kombinationen aus je zwei Führungsnuten und einer Arretierungsnut auf, die auf um etwa 180° voneinander beabstandeten Abschnitten der Außenwand der Führungshülse angeordnet sind.

In einer Ausführungsform der Erfindung ist der erste Aufnahmeabschnitt der Einbaudose mit einem mechanischen Verbindungselement zur Aufnahme eines Energieverteilers verbunden, wobei das mechanische Verbindungselement so eingerichtet ist, dass es mit einem mit einem Energieverteiler verbundenen komplementären Verbindungselement formschlüssig verbindbar ist, wobei das mechanische Verbindungselement einen im Wesentlichen hohlzylindrischen Körper mit einer Zylinderaußenwand, einer Zylinderinnenwand, einem ersten und einem zweiten Ende aufweist, wobei das mechanische Verbindungselement ein erstes Führungselement aufweist, das mit einem mit dem Energieverteiler verbundenen komplementären Führungselement so verbindbar ist, dass bei einem Ineingrifftreten der Führungselemente des Aufnahmeelements und des Energieverteilers das Aufnahmeelement und der Energieverteiler eine definierte vorbestimmte Lage zueinander einnehmen, wobei das mechanische Verbindungselement zumindest ein erstes Befestigungselement aufweist, das mit einem komplementären Befestigungselement des Energieverteilers so formschlüssig verbindbar ist, dass ein Reibschluß zwischen den Führungsabschnitten des Aufnahmeelements und des Energieverteilers bereitgestellt wird, wobei das erste Führungselement an dem ersten Ende des Körpers angeordnet ist, während das zweite Ende des Körpers mit dem Aufnahmeabschnitt des Gehäuses verbunden ist und wobei an der Zylinderwand ein in radialer Richtung gegenüber der Zylinderinnenwand nach Innen vorspringender zweiter Aufnahmeabschnitt zur Aufnahme eines Konnektorenträgers oder eines Distanzelements vorgesehen ist.

Eine solche Anordnung erfordert beim Zusammenfügen von Energieverteiler und Aufnahmeelement keine Verdrehung der beiden Elemente gegeneinander, so wie dies beispielsweise beim Zusammenfügen eines Bajonettverschlusses aus dem Stand der Technik erforderlich ist. Die Kombination aus Führungselement und Befestigungselement stellt die erforderliche mechanische Positioniergenauigkeit und Stabilität bereit, die selbst eine Selbstkontaktierung der Datenverbindung ermöglicht.

Im Sinne der vorliegenden Anmeldung sind das erste Führungselement und das Befestigungselement des mechanischen Verbindungselements voneinander getrennte Elemente, wobei Führungselement und Befestigungselement ein- oder mehrstückig ausgestaltet sein können.

Das erste Führungselement dient beim Zusammenfügen von Aufnahmeelement und Energieverteiler dazu, eine hochpräzise Positionierung der beiden Elemente relativ zueinander bereitzustellen und gleichzeitig eine hochstabile mechanische formschlüssige Verbindung zwischen den beiden Elementen zu gewährleisten, die auch die Einleitung hoher Momente von dem Energieverteiler gegebenenfalls bis in den Rohboden des Gebäudes ermöglicht.

Das Befestigungselement dient der Sicherung der formschlüssigen Verbindung zwischen den Führungselementen und verhindert durch den bewirkten Reibschluß zwischen den Führungselementen eine Verdrehsicherung von Aufnahmeelement und Energieverteiler gegeneinander.

In einer Ausführungsform weist das mechanische Verbindungselement an seinem zweiten Ende einen Befestigungskranz mit Durchgangsbohrungen auf, so dass das Verbindungselement mit dem ersten Aufnahmeabschnitt des Gehäuses verschraubbar ist.

Dabei ist es zweckmäßig, wenn in der Zylinderaußenwand des mechanischen Verbindungselements über der Durchgangsbohrung des Befestigungskranzes eine Ausnehmung vorgesehen ist, welche ein in Eingriffbringen eines Schraubendrehers oder -schlüssels mit den Befestigungsschrauben für das mechanische Verbindungselement ermöglicht. Auf diese Weise ist eine kompakte Bauart der Einbaudose möglich. Der hohlzylindrische Körper des mechanischen Verbindungselements kann mit einem Durchmesser der Zylinderaußenwand bereitgestellt werden, der nur geringfügig kleiner ist als der Durchmesser der Zylinderinnenwand des Gehäuses. Auf diese Weise wird trotz Bereitstellung der Funktionalitäten eine gute Ausnutzung des beschränkten Volumens der Dose erreicht. Zwischen der Zylinderaußenwand des mechanischen Verbindungselements und der Zylinderinnenwand des Gehäuses muss nur ein Abstand verbleiben, der die Aufnahme eines Abschnitts des Deckels und der Führungshülse ermöglicht.

In einer Ausführungsform der Erfindung weist das erste Führungselement des mechanischen Verbindungselements eine zumindest abschnittsweise konische Führungsfläche auf. Eine solche Führungsfläche ermöglicht ein leichtes Zusammenfügen von Aufnahmeelement und Energieverteiler, ist selbstzentrierend bei einer hohen reproduzierbaren Positioniergenauigkeit und stellt gleichzeitig eine sehr stabile mechanische Verbindung bereit, die es erlaubt, große Momente zwischen dem Energieverteiler und dem Aufnahmeelement zu übertragen.

In einer Ausführungsform weist die konische Führungsfläche einen Konuswinkel in einem Bereich von 8° (Grad) bis 18° (Grad), vorzugsweise in einem Bereich von 10° (Grad) bis 15° (Grad) und besonders bevorzugt von etwa 12,5° (Grad) auf. Ein derart gewählter Konuswinkel hat sich als vorteilhaft erwiesen, da er einen effektiven Reibschluss zwischen den konischen Führungsflächen des Aufnahmeelements und des Energieverteilers bereitstellt und darüber hinaus zu einer mechanischen Verbindung zwischen Aufnahmeelement und Energieverteiler mit großer Stabilität führt. Der so gewählte Konuswinkel gewährleistet darüber hinaus ein für den Benutzer leichtes Zusammenfügen der Elemente. Als Konuswinkel im Sinne der vorliegenden Anmeldung wird der halbe Öffnungswinkel des Kegels bzw. des Kegelstumpfes verstanden, dessen Kegelfläche die konischen Führungsflächen definiert.

In einer Ausführungsform weist die konische Führungsfläche eine Konushöhe in einem Bereich von 6 mm bis 10 mm und bevorzugt von etwa 8,1 mm auf. Eine derartige Konushöhe resultiert aus einer Abwägung der erforderlichen mechanischen Stabilität und der vertretbaren Bauhöhe des Aufnahmeelements. Als Konushöhe im Sinne der vorliegenden Anmeldung wird die Höhe des Kegelstumpfes verstanden, dessen Kegelfläche die konischen Führungsflächen definiert.

Zweckmäßigerweise ist das Befestigungselement des mechanischen Verbindungselements über eine Schraubverbindung mit dem Befestigungselement des Energieverteilers verbindbar. Dabei ist es vorteilhaft, wenn das Befestigungselement, das erste Führungselement ein konzentrisch umgebendes Gewinde ist.

Die Ausgestaltung des mechanischen Verbindungselements mit einem zweiten Aufnahmeabschnitt ermöglicht es, das mechanische Verbindungselement zunächst mit dem Gehäuse der Einbaudose zu verbinden und dann die Einbaudose durch Verbinden eines Konnektorenträgers oder eines Distanzelements mit dem zweiten Aufnahmeabschnitt mit der vorgesehenen Funktionalität zu versehen.

In einer Ausführungsform der Erfindung weist das mechanische Verbindungselement ein zweites Befestigungselement, vorzugsweise ein Innengewinde, auf, welches mit einem Standsockel verbindbar ist. Auf diese Weise kann die erfindungsgemäße Einbaudose, wenn sie mit einer Ausführungsform des zuvor beschriebenen mechanischen Verbindungselements bestückt ist, nicht nur als Einbaudose, die in ein flächiges Konstruktionselement eingelassen wird und an diesem festgespannt wird, verwendet werden, sondern auch als Sockel, der unmittelbar mit dem Rohboden oder alternativ der Deckenunterseite eines Gebäudes verbindbar ist und hohe Lasten bzw. Momente aufnehmen kann.

In einer Ausführungsform der Erfindung ist das mechanische Verbindungselement mit einer den hohlzylindrischen Körper des Verbindungselements zumindest abschnittsweise konzentrisch umgebenden Führungshülse zum Führen und Halten eines Deckels verbunden, wobei die Führungshülse einen im Wesentlichen hohlzylindrischen Körper mit einer Außenwand, einer Innenwand, einem ersten Ende und einem zweiten Ende aufweist.

Dabei handelt es sich in einer Ausführungsform um eine Führungshülse mit den zuvor beschriebenen Eigenschaften. In einer Ausführungsform ist die Führungshülse statt eines Energieverteilers an dem mechanischen Verbindungselement aufgenommen.

In einer weiteren Ausführungsform weist die Führungshülse an ihrem ersten Ende einen Abschnitt auf, der die Deckelfläche des mechanischen Verbindungselements abdeckt und vorzugsweise das mechanische Verbindungselement zumindest abschnittsweise umgreift. Auf diese Weise wird eine hohe Stabilität der Führungshülse erreicht.

In einer Ausführungsform ist die Führungshülse mit Hilfe von Schrauben an dem zweiten Aufnahmeabschnitt des mechanischen Verbindungselements befestigt. Dazu weist die Führungshülse vorzugsweise mindestens einen Abschnitt auf, der sich ausgehend von der Zylinderaußenwand des mechanischen Verbindungselements über die Stirnseite des mechanischen Verbindungselements bis zu der Zylinderinnenwand des mechanischen Verbindungselements erstreckt und der sich auf dem zweiten Aufnahmeabschnitt des mechanischen Verbindungselements abstützt.

In einer bevorzugten Ausführungsform der Erfindung ist der erste Aufnahmeabschnitt des Gehäuses mit einer Führungshülse zum Führen und Halten eines Deckels verbunden, wobei die Führungshülse einen im Wesentlichen hohlzylindrischen Körper mit einer Außenwand, einer Innenwand, einem ersten Ende und einem zweiten Ende aufweist, wobei das zweite Ende mit dem ersten Aufnahmeabschnitt des Gehäuses verbunden ist. In dieser Ausführungsform ist statt dem zuvor detailliert beschriebenen Verbindungselement am ersten Aufnahmeabschnitt des Gehäuses die Führungshülse aufgenommen, welche die Einbaudose mit einer Führungsfunktionalität für einen Liftdeckel versieht. Weitere detaillierte Ausgestaltungen der Führungshülse wurden zuvor beschrieben.

In einer Ausführungsform der an dem ersten Aufnahmeabschnitt des Gehäuses vorgesehenen Führungshülse weist diese an der Zylinderinnenwand am zweiten Ende ihres hohlzylindrischen Körpers einen in radialer Richtung gegenüber der Zylinderinnenwand nach Innen vorspringenden zweiten Aufnahmeabschnitt zur Aufnahme eines Konnektorenträgers oder eines Distanzelements auf.

Eine solche Ausführungsform ermöglicht es, die "nackte" Einbaudose zunächst mit einer Führungshülse zu bestücken, um eine Liftdeckelfunktionalität bereitzustellen, wobei die Wahl der Führungshülse zunächst noch nicht die zur Verfügung gestellten elektrischen bzw. Datenanschlüsse festlegt. Um nun die Dose mit den elektrischen Funktionalitäten ausstatten zu können, weist die Führungshülse selbst den zweiten Aufnahmeabschnitt auf, der mit einem Konnektorenträger oder über ein Distanzelement mit einem Konnektorenträger verbindbar ist.

In einer alternativen Ausführungsform ist der erste Aufnahmeabschnitt des Gehäuses mit einem Montageelement für einen Energieverteiler verbunden, wobei das Montageelement eine Mehrzahl von Bohrungen zum Verschrauben des Montageelements mit einem Energieverteiler aufweist, wobei das Montageelement vorzugsweise einen radial nach innen vorspringenden zweiten Aufnahmeabschnitt zur Aufnahme eines Konnektorenträgers oder eines Distanzelements aufweist.

Anders als das zuvor beschriebene mechanische Verbindungselement mit einem Führungselement zur selbstzentrierenden Aufnahme und Führung eines Energieverteilers ermöglicht das Montageelement eine starre, nur mit Werkzeug lösbare Verbindung der Einbaudose mit einem Energieverteiler. Für bestimmte Anwendungsfälle, in denen insbesondere keine Selbstkontaktierung erforderlich ist, ist jedoch eine solche starre Verbindung eine durchaus erstrebenswerte preiswerte Lösung.

In einer Ausführungsform ist der zweite Aufnahmeabschnitt der Führungshülse, des mechanischen Verbindungselements oder des Montageelements mit einem Konnektorenträger verbunden. Bei dem Konnektorenträger handelt es sich um ein Element, in dem elektrische Verbindungselemente wie Stecker und Buchsen montierbar sind, um Stromanschlüsse und Datenanschlüsse bereitzustellen. Dabei kann sowohl der Konnektorenträger als auch seine Bestückung der entsprechenden zu lösenden Kontaktierungs- bzw. Versorgungsaufgabe angepasst werden.

In einer Ausführungsform ist der Konnektorenträger ein plattenförmiges Element, das sich im Wesentlichen über den gesamten Querschnitt der Einbaudose bzw. über den Querschnitt, welcher durch die Innenwand der Führungshülse oder die Innenwand des mechanischen Verbindungselements begrenzt wird, ausfüllt.

In einer Ausführungsform ist zwischen dem zweiten Aufnahmeabschnitt und dem Konnektorenträger ein Distanzelement angeordnet, welches es ermöglicht, die Ebene, in welcher der Konnektorenträger in der Führungshülse oder dem mechanischen Verbindungselement angeordnet ist, frei zu wählen und so die Platzausnutzung im Innenraum der Einbaudose den technischen Erfordernissen für die entsprechenden Buchsen bzw. Stecker anzupassen.

Dabei kann das Distanzelement mit der Führungshülse oder dem mechanischen Führungselement ein- oder mehrteilig ausgestaltet sein. Insbesondere eine mehrteilige Ausgestaltung ermöglicht eine hohe Flexibilität. In einer bevorzugten Ausführungsform ist das Distanzelement so gewählt, dass der Konnektorenträger einen möglichst großen Abstand zum zweiten Ende der Führungshülse oder des mechanischen Verbindungselements aufweist. Auf diese Weise lässt sich das in der Einbaudose zur Verfügung stehende Volumen optimal nutzen und die volle Funktionalität der Dose bereitstellen.

In einer Ausführungsform weist der Konnektorenträger mindestens ein elektrisches Verbindungselement auf, das so eingerichtet ist, dass es mit einem komplementären elektrischen Verbindungselement elektrisch leitend verbindbar ist. Ein solches elektrisches Verbindungselement ist beispielsweise ein Stecker oder eine Buchse zur Bereitstellung eines Stromanschlusses oder einer Datenverbindung.

In einer Ausführungsform der Erfindung weist der Konnektorenträger oder das Distanzelement ein zweites Führungselement auf, das so eingerichtet ist, dass es mit einem mit einem Energieverteiler verbundenen komplementären Führungselement verbindbar ist. Durch Vorsehen eines ersten Führungselements an dem mechanischen Verbindungselement und eines zweiten Führungselements an dem Konnektorenträger oder dem Distanzelement wird eine Selbstkontaktierung der elektrischen Verbindung beim Einstecken eines Energieverteilers in die mit einem mechanischen Verbindungselemente bestückte Einbaudose ermöglicht.

Unter einem Energieverteiler wird im Sinne der vorliegenden Anmeldung jede Art von Energiesäule verstanden, die in der erfindungsgemäßen Einbaudose aufnehmbar ist und die dem Benutzer standardisierte Steckdosen, insbesondere Schukosteckdosen, und/oder Datendosen und/oder Leuchten oder Kombinationen davon bereitstellt. Alternativ oder zusätzlich kann ein solcher Energieverteiler auch mit Steuerelementen für die Medientechnik und/oder Gebäudeautomation, z.B. Sonnenschutz, Beschallungsanlage, etc., versehen sein.

Als Energieverteiler im Sinne der vorliegenden Anmeldung werden jedoch auch einfache Abgangsführungen verstanden, die eine Kabelführung aus dem Aufnahmeelement heraus bereitstellen.

Aufgrund der hohen Fertigungstiefe der einzelnen Elemente und der Modularität des Aufbaus können Änderungen an der Bestückung der Einbaudose auch von Laien vorgenommen werden, so dass der Einsatz einer Elektrofachkraft nicht erforderlich ist.

Weitere Vorteile, Merkmale und Anwendungsmöglichkeiten der vorliegenden Erfindung werden anhand der vorliegenden Beschreibung von Ausführungsformen und der dazugehörigen Figuren deutlich.
- Figur 1: zeigt eine seitliche Querschnittsansicht einer ersten Ausführungsform der erfin- dungsgemäßen Einbaudose mit mechanischem Verbindungselement und Füh- rungshülse entlang einer Linie A-A aus Figur 2.
- Figur 2: zeigt eine Draufsicht auf die Einbaudose aus Figur 1.
- Figur 3: zeigt eine dreidimensionale Schnittansicht der Einbaudose aus Figuren 1 und 2 entlang einer Linie A-A aus Figur 2.
- Figur 4: zeigt eine teilweise Explosionsansicht der Einbaudose aus Figuren 1 bis 3 mit einem Liftdeckel.
- Figur 5: zeigt die Einbaudose aus den Figuren 1 bis 4 mit einem Abgangsdom.
- Figur 6: zeigt die Einbaudose aus Figuren 1 bis 4 mit einer Energiesäule.
- Figur 7: zeigt eine schematische dreidimensionale Ansicht einer Einbaudose aus den Fi- guren 1 bis 3 mit einem Rohbodenstandkranz.
- Figur 8: zeigt die Einbaudose aus Figur 7 mit einer daran aufzunehmenden Energiesäule mit einer Arbeitsplatzleuchte in einer teilweise weggebrochenen Ansicht.
- Figur 9: zeigt eine vollständige Ansicht der Anordnung aus Figur 8.
- Figur 10: zeigt eine seitliche Schnittansicht einer erfindungsgemäßen Bodendose mit Füh- rungshülse entlang einer Linie C-C aus Figur 11.
- Figur 11: zeigt eine Draufsicht auf die Einbaudose aus Figur 10.
- Figur 12: zeigt eine dreidimensionale Schnittansicht der Einbaudose aus Figuren 10 und 11 entlang einer Linie C-C aus Figur 11.
- Figur 13: zeigt eine seitliche Schnittansicht der Einbaudose aus Figuren 10 bis 12 mit einem Liftdeckel.
- Figur 14: zeigt eine Draufsicht auf die Einbaudose aus Figur 13.
- Figur 15: zeigt eine teilweise Explosionsansicht der Einbaudose aus Figur 14.
- Figur 16: zeigt eine dreidimensionale teilweise Explosionsansicht einer Einbaudose mit Deckel.
- Figur 17: zeigt eine dreidimensionale teilweise Explosionsansicht der Einbaudose aus Figur 16 von schräg oben.
- Figur 18: zeigt eine seitliche Schnittansicht einer alternativen Ausführungsform der Einbau- dose.
- Figur 19: zeigt eine seitliche Schnittansicht einer Kombination aus der Einbaudose aus Fi- gur 18 mit einem Dübel und einer Abstandsschraube.
- Figur 20: zeigt die Anordnung aus Figur 19 mit einer zusätzlichen Klemmdose.
- Figur 21: zeigt eine Explosionsansicht der Einbaudose aus Figur 18 mit einem Montage- element und einer Energiesäule.
- Figur 22: zeigt eine Explosionsansicht der Einbaudose aus Figur 1 mit einem Montageele- ment für eine aufsteckbare Stehleuchte. ^
- Figur 23: zeigt eine dreidimensionale Abbildung der Anordnung aus Figur 20.
- Figur 24: zeigt eine Explosionsansicht einer Einbaudose in einer Ausführungsform zum Einbau in eine abgehängte Deckenkonstruktion.

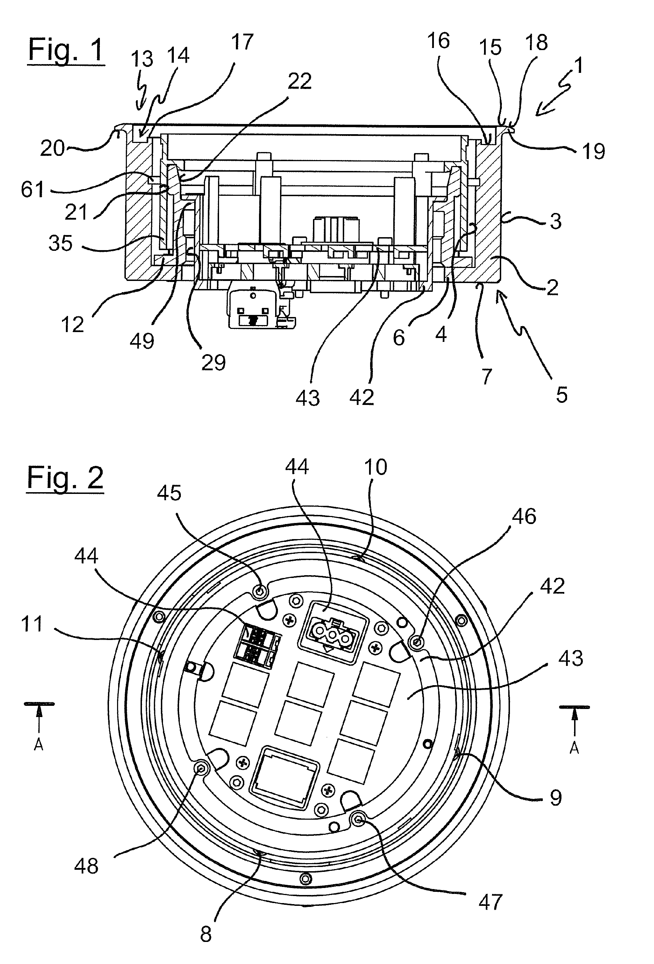

Die Figuren 1 bis 3 zeigen eine erfindungsgemäße Einbaudose 1 in einer ersten Ausführungsform als Einbausockel, der zur Aufnahme einer Energiesäule geeignet ist.

Wesentliches Element der Einbaudose ist ihr hohlzylindrisches Gehäuse 2, das eine Gehäuseaußenwand 3 und eine Gehäuseinnenwand 4 aufweist. Das Gehäuse 2 weist an seinem unteren ersten Ende 5 einen Aufnahmeabschnitt 6 auf, der ausgehend von der Gehäuseinnenwand 4 in radialer Richtung nach Innen vorspringt und flächenbündig mit der Gehäuseunterkante bzw. der Stirnseite 7 des Hohlzylinders abschließt.

Der Aufnahmeabschnitt 6 bildet einen Ring, der als Auflager für die in der Dose anzuordnenden Elemente dient. In dem Aufnahmeabschnitt 6 sind Gewindebohrungen eingelassen, in welche Schrauben (in Figur 2 mit 8 bis 11 bezeichnet) zur Befestigung eines mechanischen Verbindungselements 12 einschraubbar sind.

Am oberen, zweiten Ende 13 des Gehäuses 2 ist eine Dichtungsaufnahme 14 für eine Dichtung zur Abdichtung eines Deckels gegenüber dem Gehäuse 2 vorgesehen, wobei die Dichtungsaufnahme 14 eine ringförmige Ausnehmung in der Stirnseite 15 des Gehäuses 2 ist. Die Ausnehmung 14 stellt eine ringförmig umlaufende Dichtfläche 16 bereit, die mit einem an dem Deckel vorgesehenen O-Ring in Eingriff tritt.

Im Bereich der Gehäuseinnenwand 4 weist die Stirnseite 15 des hohlzylindrischen Gehäuses 2 ebenfalls eine Ausnehmung 17 auf, die dazu dient, dass der Deckel an dem Gehäuse 2 so aufgenommen werden kann, dass er flächenbündig mit der Oberseite 18 eines Abdeckabschnitts 19 abschließt.

Der Abdeckabschnitt 19 dient der Überdeckung eines flächigen Konstruktionselements, in welches die Einbaudose 1 eingebaut bzw. eingelassen wird. Dazu bildet der Abdeckabschnitt 19 eine kragenförmige radial gegenüber der Gehäuseaußenwand 3 vorspringende Lippe mit einer Auflagefläche 20, mit der sich die Einbaudose 1 im eingebauten Zustand an dem flächigen Konstruktionselement, beispielsweise der Bodenplatte eines Doppelbodens, abstützt.

Das mit dem ersten Aufnahmeabschnitt 6 verschraubte mechanische Verbindungselement 12 ist im Wesentlichen ebenfalls hohlzylindrisch. Das mechanische Verbindungselement 12 weist zwei für die Funktion der Einbaudose 2 als Sockel, beispielsweise für eine Energiesäule, wesentliche Elemente auf: ein Außengewinde 21 als Befestigungselement sowie eine konische Fläche 22 als erstes Führungselement.

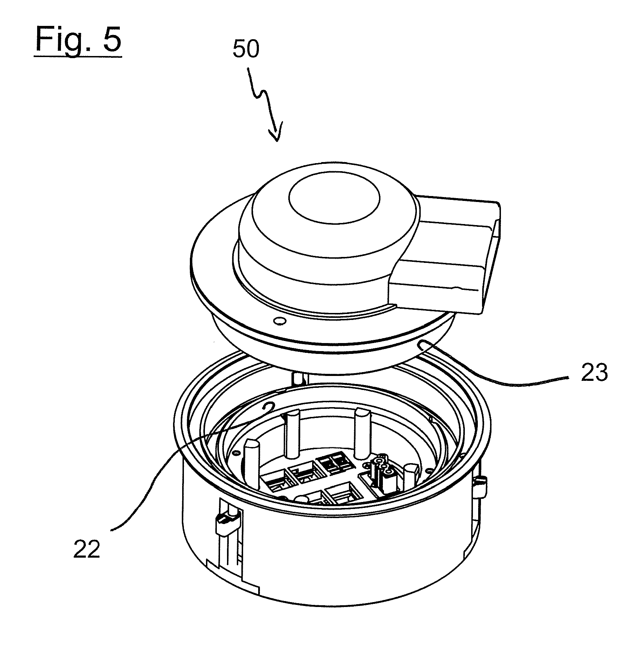

Die konische Fläche 22 ist als Innenkonus ausgeführt, welcher sich von oben nach unten verjüngt. Er weist in der dargestellten Ausführungsform einen Konuswinkel von 12,5° auf. Um eine stabile mechanische Verbindung zwischen der Einbaudose 2 und einem Energieverteiler bereitzustellen, weist ein entsprechender Energieverteiler ein dazu komplementär ausgestaltetes mechanisches Verbindungselement auf. In den Figuren 5, 6, 8 und 9 sind die komplementären Führungsflächen der Energieverteiler 50, 51, 55 mit 23 bezeichnet.

Ist der Energieverteiler vollständig in die Einbaudose 2 eingeführt, so weisen die beiden eine hochpräzise Zentrierung über die beiden Führungsflächen 22, 23 auf. Darüber hinaus ermöglichen die in Eingriff befindlichen Konusflächen 22, 23 eine optimale Kopplung zwischen dem Energieverteiler und der Einbaudose 2. Insbesondere können auf den Energieverteiler ausgeübte Drehmomente von der Einbaudose 2 aufgenommen und in einen Hohlraum- oder Doppelboden oder in den Rohboden eingeleitet werden.

Zur Erhöhung der mechanischen Stabilität und um ein unbeabsichtigtes Abheben des Energieverteilers aus der Einbaudose 2 zu verhindern, wird nach der vollständigen Aufnahme des Energieverteilers der Einbaudose 2 eine Überwurfmutter des Energieverteilers mit dem Gewinde 21 des mechanischen Verbindungselements 12 verschraubt. Auf diese Weise wird ein Reibschluß zwischen den konischen Führungsflächen 22, 23 bereitgestellt, der insbesondere auch ein Verdrehen der beiden Elemente gegeneinander verhindert. Um dies zu erreichen, hinterschneidet die Überwurfmutter mit einem Abschnitt einen Teil des Trägerrohrs des Energieverteilers und drückt damit beim Anziehen der Schraubverbindung das Trägerrohr mit seiner konischen Fläche 23 gegen die konische Fläche 22 des mechanischen Verbindungselements 12 der Einbaudose 2.

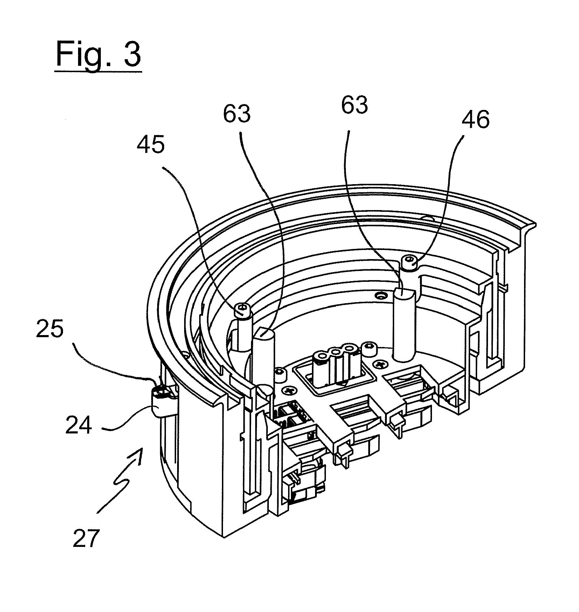

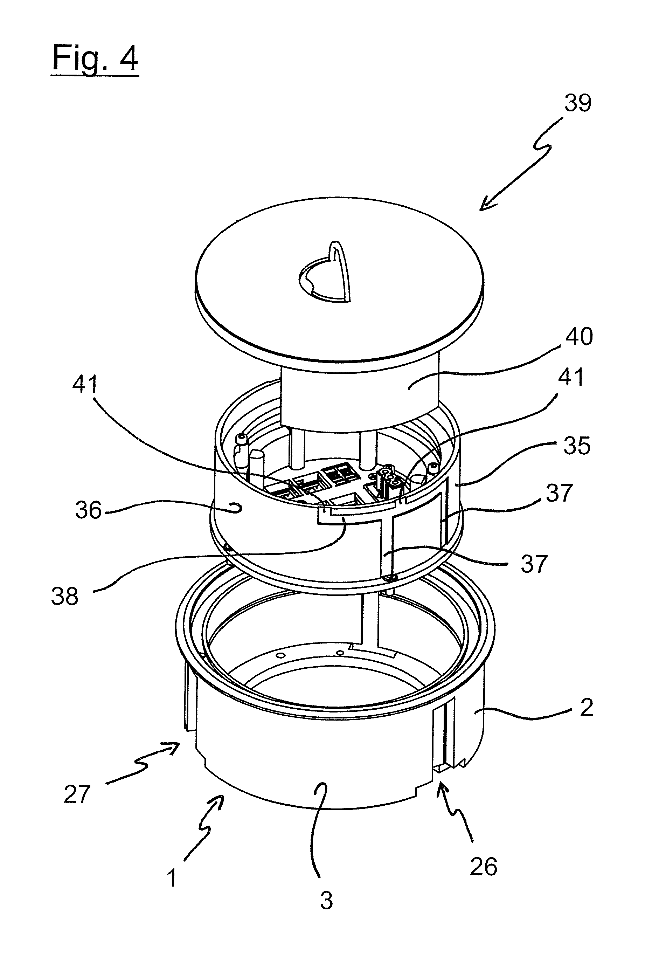

Wie in Figur 3 schematisch zu erkennen weist die Einbaudose gemäß den Figuren 1 bis 3 drei Spannkrallen 24 mit Spannflächen 25 auf. Die Spannflächen 25 zeigen in Richtung der Auflagefläche 20 des Abdeckabschnitts 19 und können beim Anziehen der Spannkrallen 24 in einer Richtung auf die Auflagefläche 20 hin die Einbaudose beispielsweise an einem Doppelboden festkrallen. Die Krallen 24 sind wie in Figur 4 zu erkennen, ebenfalls nur optional an den dafür vorgesehenen Aufnahmen 26, 27 der Gehäuseaußenwand 3 des Gehäuses 2 der Einbaudose 1 aufnehmbar.

Bei der in den Figuren 1 bis 4 dargestellten Bestückung der Einbaudose 2 ist das mechanische Verbindungselement 12 von einer im Wesentlichen hohlzylindrischen Führungshülse 35 umgeben, die dazu dient, einen Liftdeckel zu führen, um eine Bodenauslassfunktionalität der Einbaudose 1 bereitzustellen.

Die Funktion der Führungshülse 35 wird am Besten anhand von Figur 4 deutlich. Die zylindrische Außenwand 36 der Führungshülse 35 weist auf zwei in etwa um 180° gegenüberliegend angeordneten Stellen zwei parallel zur Zylinderachse des Gehäuses 2 verlaufende Führungsnuten 37 auf, die in eine Arretierungsnut 38 münden, welche im Wesentlichen in Umfangsrichtung verläuft. Der in Figur 4 gezeigte Deckel 39 hat auf den Innenseiten zweier Führungsabschnitte 40 zwei Führungsvorsprünge (in der Figur nicht gezeigt), mit der der Deckel in den axialen Führungsnuten 37 von der Einbaudose 2 in einer axialen Richtung angehoben werden kann, um den Deckel dann um die Zylinderachse 2 des Gehäuses zu verschwenken und mit den Führungsvorsprüngen in der Arretierungsnut 38 zu arretieren.

Die am zweiten Ende der Außenwand 36 der Führungshülse 35 angeordnete Arretierungsnut verfügt über zwei Auslassöffnungen 41, durch welche der Deckel vollständig von dem Gehäuse 2 der Einbaudose 1 entfernt werden kann.

In der arretierten Position befindet sich der Deckel 39 in einem Abstand von der Oberkante 15 der Einbaudose 1 bzw. deren Gehäuse 2, so dass Kabel aus der Einbaudose 1 herausgeführt werden können.

In der in den Figuren 1 bis 3 dargestellten Bestückung ist das mechanische Verbindungselement 12 mit einem Distanzelement 42 verschraubt, wobei das Distanzelement 42 eine Aufnahme für einen mit Steckern bzw. Buchsen 44 bestückten Konnektorenträger 43 aufweist. Das Distanzelement ist mit Hilfe von Schrauben 45 bis 48 mit dem mechanischen Verbindungselement 12 bzw. dem zweiten Aufnahmeabschnitt 49 daran verschraubt. Je nach Typ des Distanzelements 42 kann die Ebene des Konnektorenträgers 43 in dem Gehäuse 2 der Einbaudose 1 in axialer Richtung an unterschiedlichen Positionen angeordnet werden.

Das in den Figuren 1 bis 3 dargestellte Distanzelement 42 ist darüber hinaus mit vier zweiten Führungselementen 63 (siehe insbesondere Figur 3) ausgestattet, welche eine präzise Führung eines Konnektorenträgers oder der Konnektoren eines Energieverteilers und damit eine Selbstkontaktierung der elektrischen Verbindungen beim Einfügen des Energieverteilers in die Einbaudose ermöglichen.

Möchte der Nutzer eines Gebäudes die Funktionalität einer Einbaudose ändern, so dass diese nicht mehr den einfachen Liftdeckel, so wie er in Figur 4 dargestellt ist, aufweist, sondern einen komplexeren Energieverteiler aufnehmen kann, so wird der Deckel 39 und danach die Führungshülse 35 entfernt, so dass sich eine Situation ergibt, so wie sie in den Figuren 5 bis 8 gezeigt ist. Der nun freiliegende Konus 22 dient zur mechanischen Aufnahme wie oben beschrieben eines Energieverteilers. Alternativ zu dem Konus 22 können jedoch auch ganz anders gestaltetet mechanische Aufnahmen mit der Einbaudose verbunden sein, insbesondere zum Aufstecken eines Rohres als Mast für eine Stehleuchte.

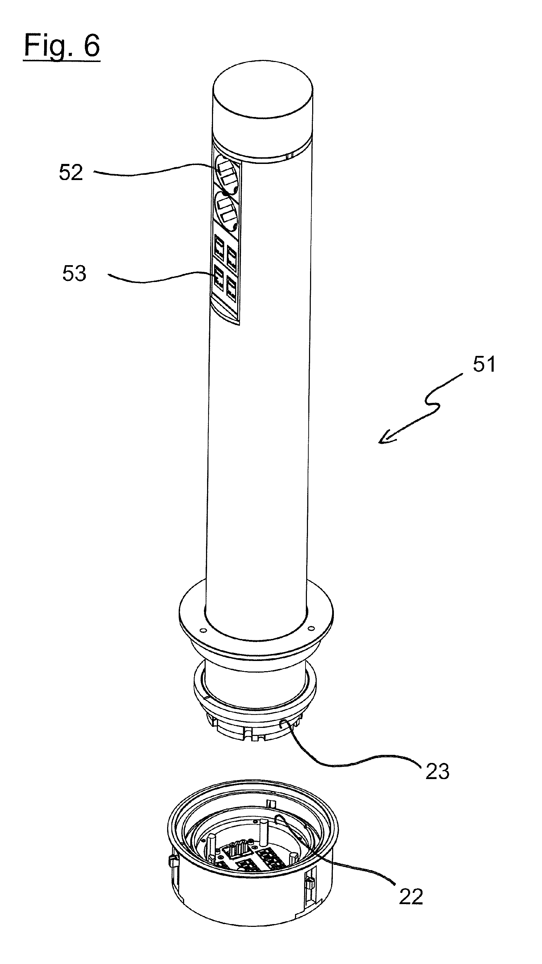

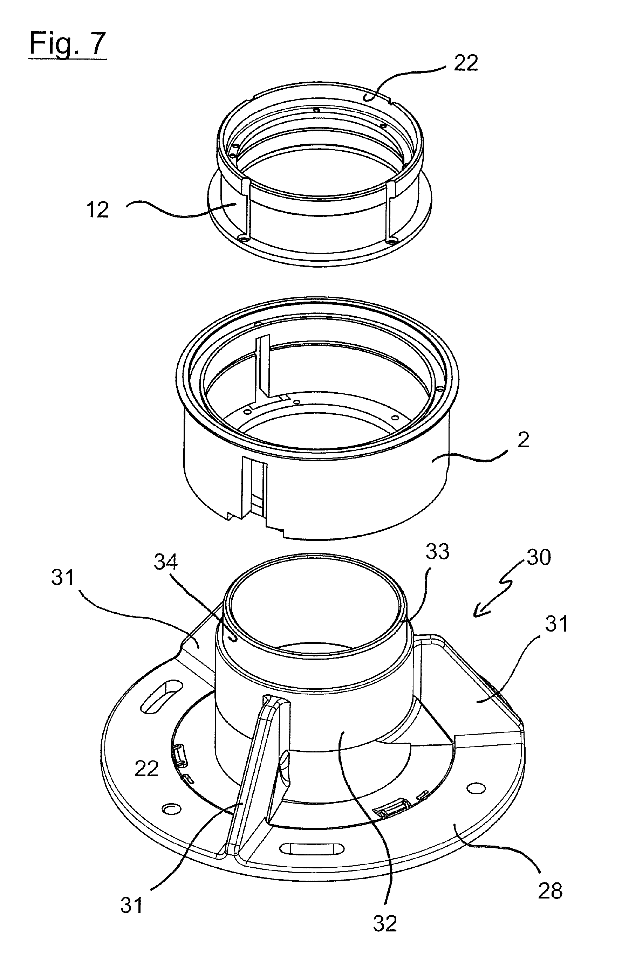

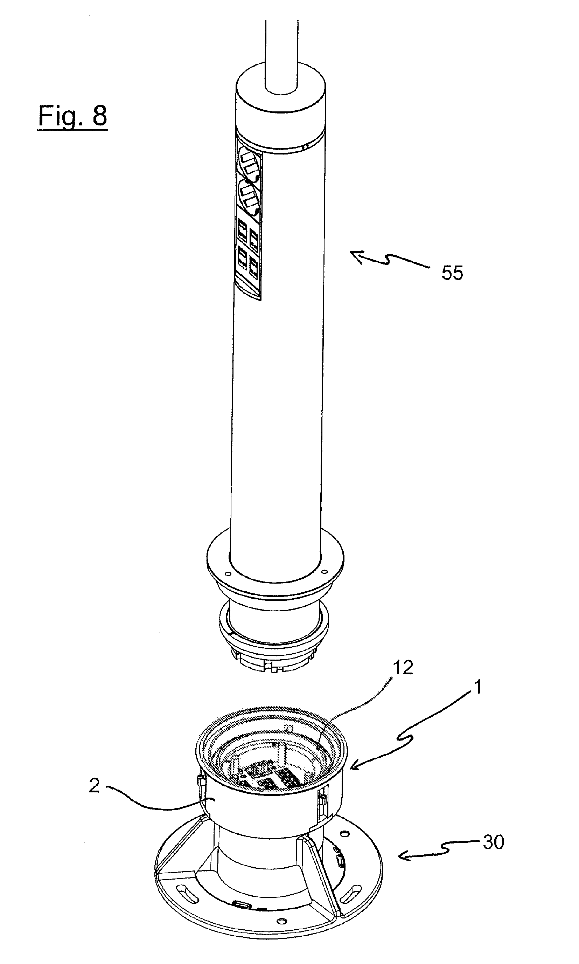

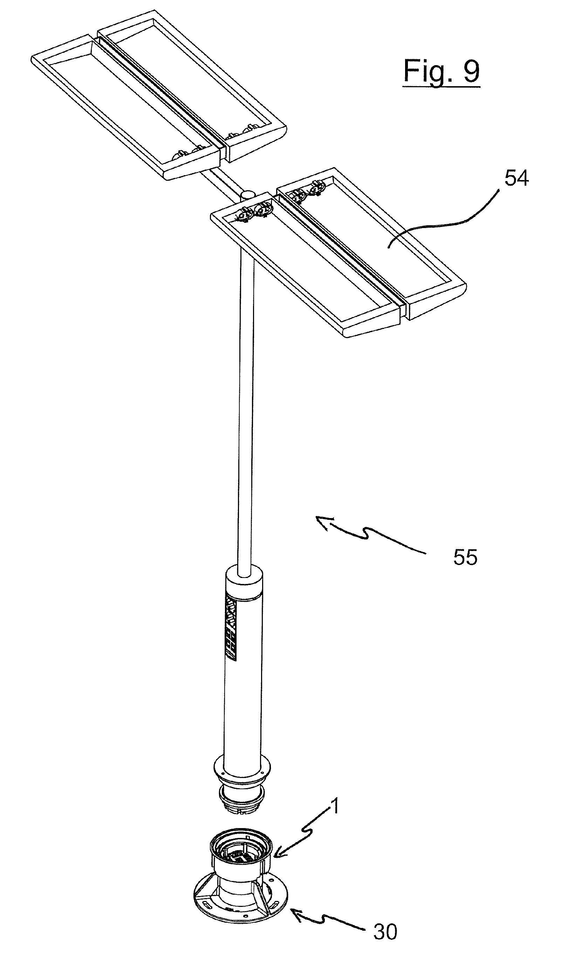

Während in Figur 5 der Energieverteiler ein flacher Auslassdom 50 ist, wird der Energieverteiler in Figur 6 von einer Energiesäule 51 gebildet, die eine Mehrzahl von Schukosteckdosen 52 und Datendosen 53 aufweist, die in einer für einen Benutzer gut erreichbaren Höhe angeordnet sind. Bei der in Figur 6 dargestellten Energiesäule mit mittlerer Höhe sind die auftretenden Momente noch klein genug, so dass der Deckel mit Hilfe der in Figur 6 dargestellten Krallen an dem Estrich oder den Bodenplatten eines Hohlraum- bzw. Doppelbodens befestigbar ist. Sollen hingegen wie in den Figuren 8 und 9 gezeigt, Energiesäulen mit großer Höhe und auskragenden Elementen wie den in Figur 9 zu sehenden Lampen 54 in der erfindungsgemäßen Einbaudose aufgenommen werden, so empfiehlt es sich, diese wie in Figur 7 im Detail gezeigt, unmittelbar auf dem Rohboden abzustützen und statt dessen auf die Krallen zu verzichten, um keine Kopplung zwischen dem Rohboden und den Bodenplatten bzw. dem Estrich bereitzustellen.

In einer alternativen Bestückung des Gehäuses 2 der Einbaudose 1 wird diese statt einer Befestigung am Estrich oder an einer Bodenplatte mit Hilfe eines Standkranzes 28 unmittelbar mit dem Rohboden eines Gebäudes verschraubt. Um eine solche Abstützung der Einbaudose auf dem Rohboden des Gebäudes zu ermöglichen, weist das mechanische Verbindungselement 12 ein Innengewinde 29 als Aufnahme für einen Sockel 30 auf. Der Sockel 30 verfügt über einen Standkranz 28, welcher mit Hilfe von Löchern und Langlöchern mit dem Rohboden verschraubt werden kann. Der Standkranz 28 ist über drei sich vom Standkranz 28 aus nach oben und radial nach innen erstreckende Stützen 31 mit einem zylindrischen Träger 32 verbunden. Der zylindrische Träger 32 weist ein Innengewinde auf, in welches ein Grundrohr 33 mit Außengewinde 34 verschraubt ist. Auf das obere Ende des Grundrohrs 33 wird mit dem Innengewinde 29 das mechanische Verbindungselement 12 und damit die Einbaudose 1 aufgeschraubt.

Über die Schraubverbindung zwischen dem Innengewinde des Trägers 32 und dem Außengewinde 34 des Grundrohrs 33 kann die Höhe des mechanischen Verbindungselementes 12 frei wählbar eingestellt werden. Die Oberkante 15 des Gehäuses 2 wird so ausgerichtet, dass sie in etwa niveaugleich mit der Oberkante des Estrichs oder der Bodenplatte des Doppel- bzw. Hohlraumbodens abschließt. Ist die Höheneinstellung erfolgt, so wird die Schraubverbindung mit Hilfe von Gewindestiften bzw. Madenschrauben festgeklemmt und die Höhenverstellung blockiert.

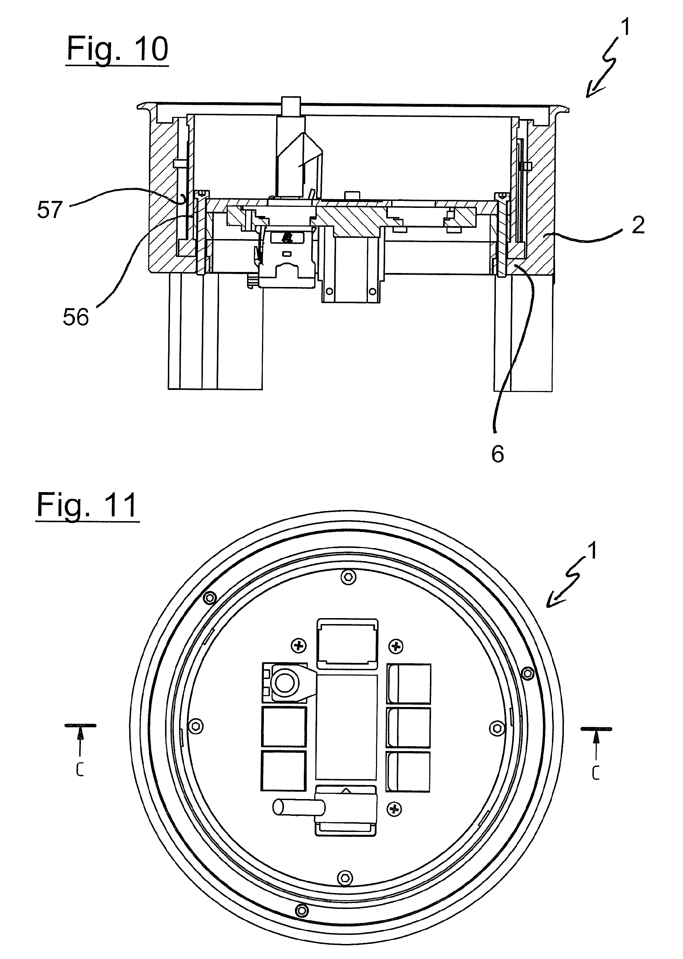

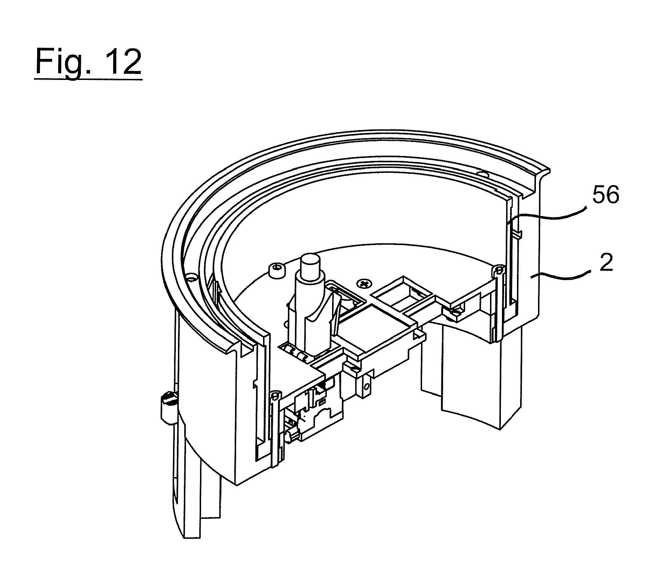

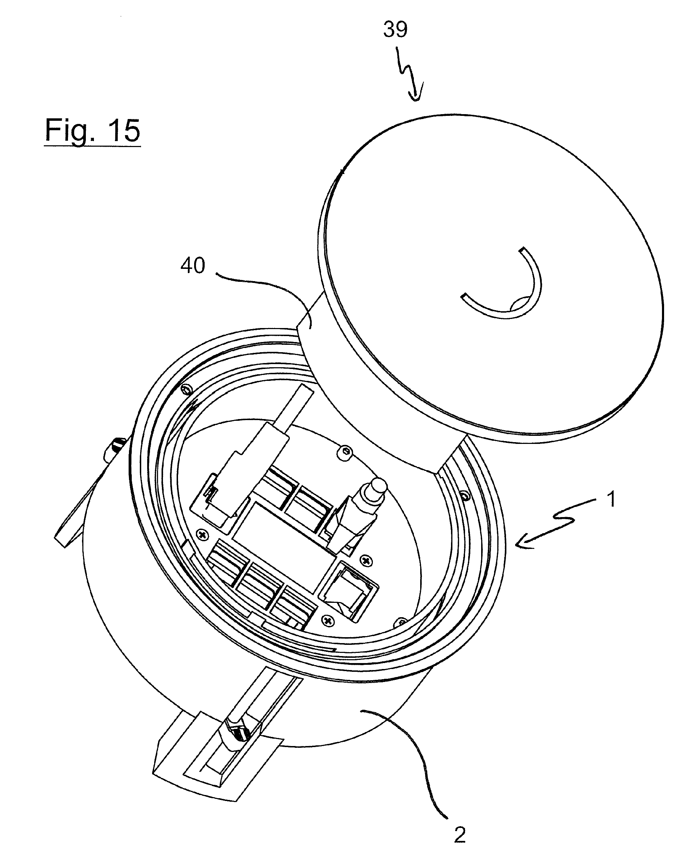

Die Figuren 10 bis 15 zeigen demgegenüber eine Bestückung der erfindungsgemäßen Einbaudose in einer reduzierten Form. Diese kommt dann zum Einsatz, wenn die Einbaudose nicht als Sockel für Energieverteiler verwendet werden soll, sondern lediglich als einfacher Bodenauslass für Anschlusskabel. In den Figuren 10 bis 15 sind alle Elemente, die mit den Elementen aus den Figuren 1 bis 9 identisch sind mit identischen Bezugszeichen bezeichnet.

Gegenüber den Figuren 1 bis 9 ist die Einbaudose in den Figuren 10 bis 15 nicht mit einem mechanischen Verbindungselement bestückt. Statt des mechanischen Verbindungselements ist an dem ersten Aufnahmeabschnitt 6 des Gehäuses 2 lediglich eine Führungshülse 56 aufgenommen, welche die gleiche Funktionalität bereitstellt wie die Führungshülse 35 bei der Bestückung aus den Figuren 1 bis 4. Das heißt die Außenwand 57 der Führungshülse 56 ist identisch beschaffen wie die Außenwand 36 der Führungshülse 35 aus den Figuren 1 bis 4.

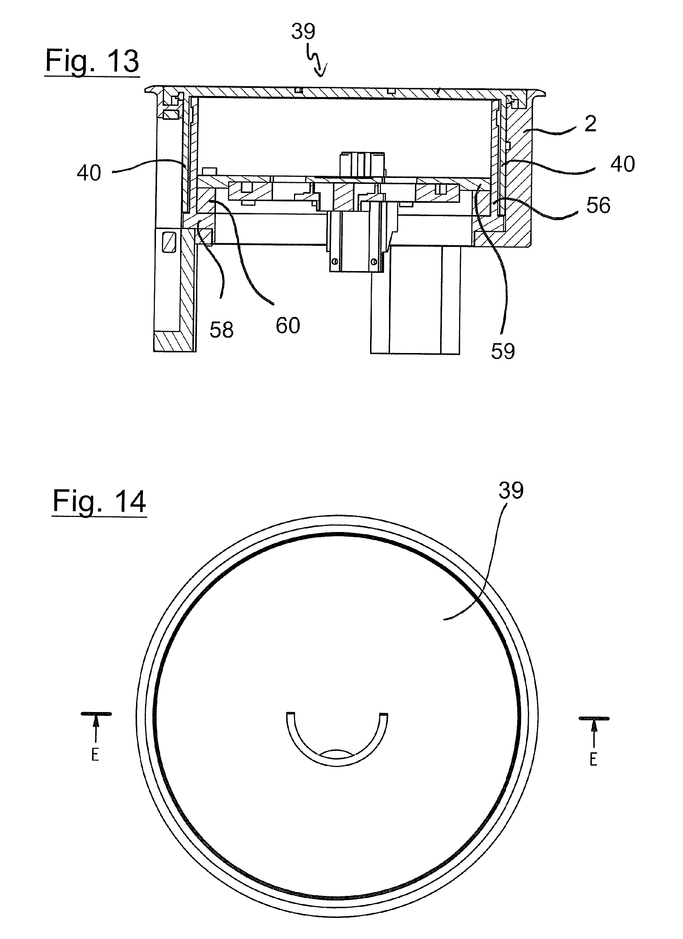

Auf diese Weise kann auch auf der Führungshülse 56 ein Liftdeckel 39 geführt werden, so wie er in den Figuren 13 bis 15 dargestellt ist.

Wie besonders gut aus den seitlichen Schnittansichten in Figuren 10 bis 13 ersichtlich ist, weist die Führungshülse 56 einen zweiten Aufnahmeabschnitt 58 auf, mit welchem in dieser Bestückung der Konnektorenträger 59 verbunden ist. Zwischen dem zweiten Aufnahmeabschnitt 58 und dem Konnektorenträger ist ein Distanzelement, hier ein Distanzring 60 angeordnet, der es ermöglicht je nach Wahl seiner Dicke die Ebene, in welcher der Konnektorenträger im Inneren des Gehäuses 2 angeordnet ist, frei zu wählen.

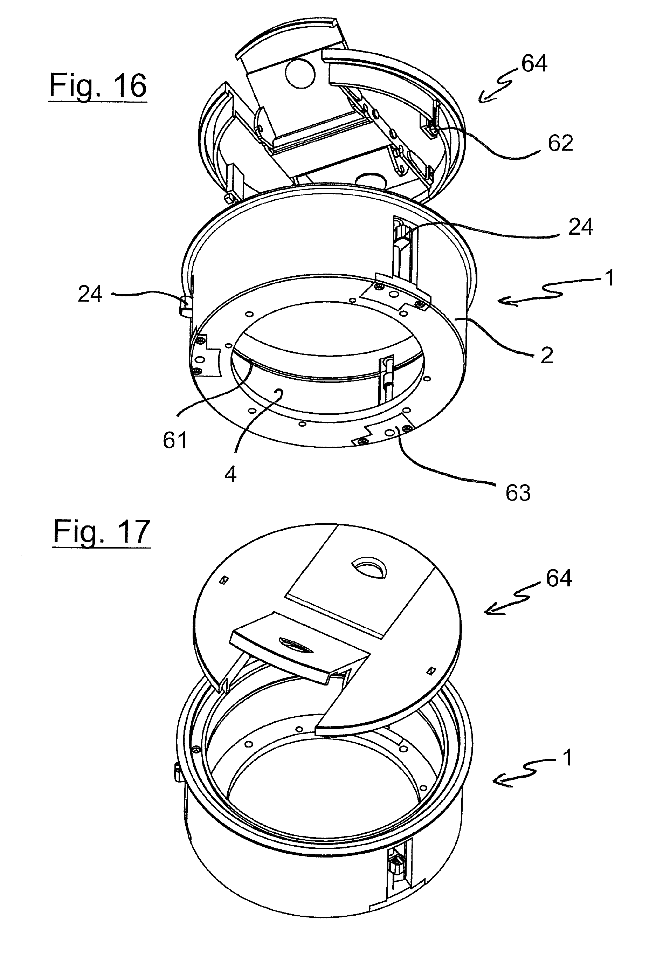

Eine dritte alternative Art, die erfindungsgemäße Einbaudose zu bestücken, ist in Figuren 16 und 17 schematisch dargestellt. In dieser Ausführungsform weist die Einbaudose weder einen Konnektorenträger noch eine Führungshülse für einen Deckel auf. Die Einbaudose 1 dient lediglich als Auslass für Kabel aus einem Hohlraum- oder Doppelboden. Um auch ohne Führungshülse dennoch einen Deckel 61 mit dem Gehäuse 2 verbinden zu können, weist die Gehäuseinnenwand 4 als Deckelaufnahme eine ringförmig umlaufende Nut 61 auf, in die entsprechende Rastnasen 62 des Deckels 64 eingreifen.

In Figur 16 ist nochmals deutlich erkennbar, dass die Krallen 24 zum Festklemmen der Einbaudose an einem flächigen Konstruktionselement in den entsprechenden Aufnahmen des Gehäuses 2 nachträglich montierbar aufgenommen sind.

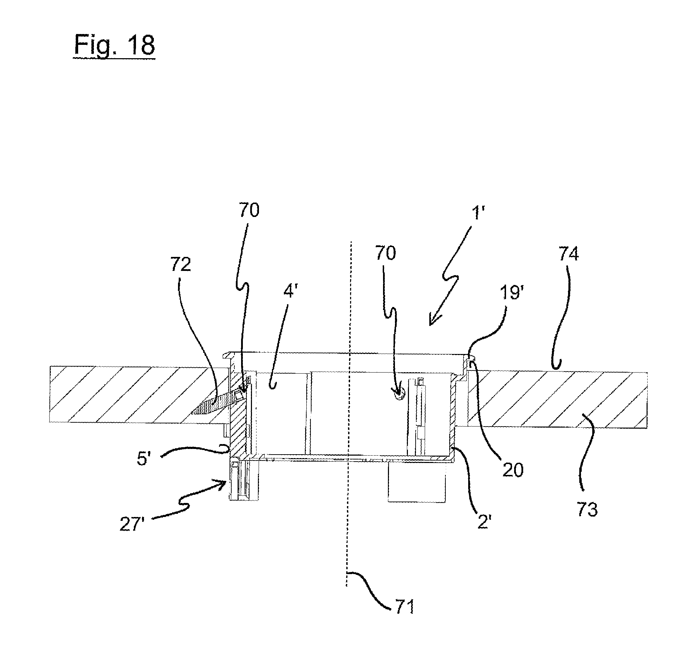

Figur 18 zeigt eine alternative Ausführungsform der erfindungsgemäßen Einbaudose 1' mit einem Gehäuse 2', wobei zusätzlich zu den Aufnahmen 27' für Spannkrallen in dem Gehäuse Durchgangsbohrungen 70 vorgesehen sind. Diese Durchgangsbohrungen 70 durchbrechen das zylindrische Gehäuse 2' und erstrecken sich von der Gehäuseinnenwand 4' zur Gehäuseaußenwand 3'.

Die Durchgangsbohrungen schließen in der dargestellten Ausführungsform einen Winkel mit der Zylinderachse 71 des Gehäuses 2' ein. In der dargestellten Ausführungsform ist eine Abstandsschraube 72 durch die Durchgangsbohrung 70 hindurch in die die Einbaudose 1' umgebende Doppelbodenplatte 73 eingeschraubt. Bei der Abstandsschraube 72 handelt es sich um eine Abstandsschraube mit einem sich über die gesamte Länge der Schraube 72 mit konstanter Steigung erstreckendes Gewinde. Daher lässt sich die Abstandsschraube 72, ohne dass Kräfte in radialer Richtung auf die Einbaudose 1' einwirken würden, in das Gehäuse 2' und in die Doppelbodenplatte 73 einschrauben. Ist die Einbaudose 1' mit Hilfe der an ihr aufgenommenen Spannkrallen (in Figur 18 nicht dargestellt) an der Doppelbodenplatte 73 festgeklemmt, so wirken die Abstandsschrauben 72 nach dem Verschrauben als Widerlager für die Spannkrallen. Die Krallen und die Abstandsschraube bilden von der Seite betrachtet zusammen ein Dreieck.

Deutlich erkennbar ist in Figur 18 ein Abstand zwischen der Auflagefläche 20' des Abdeckabschnitts 19' am oberen Ende des Gehäuses 2' von der Oberseite 74 der Doppelbodenplatte 73. Dieser Abstand bleibt nach dem Verschrauben der Einbaudose 1' mit der Doppelbodenplatte 73 konstant. Sämtliche auf die Einbaudose 1' ausgeübten Momente werden über die Abstandsschraube 72 direkt in die Doppelbodenplatte 73 und die Krallen eingeleitet.

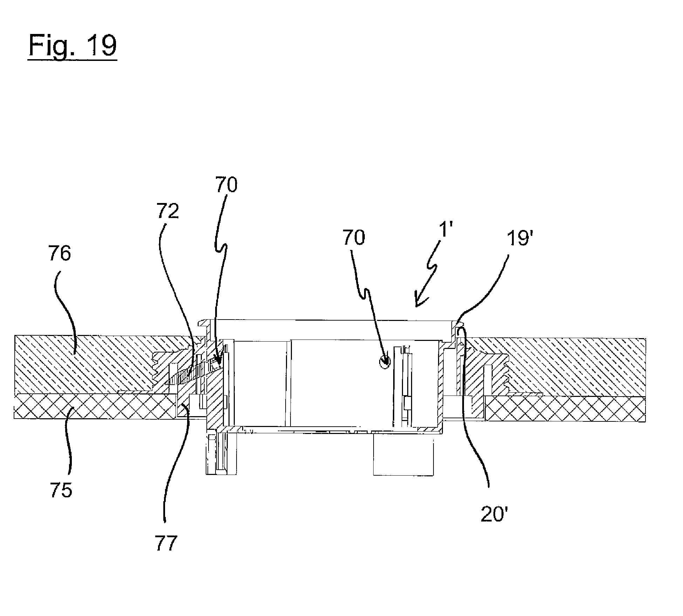

Figur 19 zeigt eine alternative Einbauweise der Einbaudose 1' aus Figur 18 in einen Hohlraumboden. Der gezeigte Hohlraumboden besteht aus einer Trägerplatte 75 und einem daraufgegossenen Estrich 76, wobei das Einbauloch für die Einbaudose 1' von einer Schalungsform 77 beim Gießen des Estrichs 76 freigehalten wird. Dies Schalungsform 77 wiederum bildet einen die Einbaudose 1' konzentrisch und ringförmig umgebenden Dübel. Die Verschraubung der Einbaudose 1' mit dem Hohlraumboden 75, 76 erfolgt in diesem Dübel 77. Die Ausgestaltung des Dübel 77 als ringförmiges Element gestattet es, die Hohlraumdose 1' vor dem Verschrauben in dem Loch in dem Hohlraumboden 75, 76 beliebig zu drehen und auszurichten und dann in dieser beliebigen Position mit Hilfe der Abstandsschrauben 72 in den Dübel 77 zu verschrauben.

In dieser Ausführungsform dient der Dübel bei der Fertigstellung des Estrichs als Schalkörper. Zu diesem Zweck weist er einen Deckel auf, der nach Fertigstellung des Estrichs abgeschnitten oder abgezogen wird. Dann wird die Einbaudose 1' in das Loch eingebracht, die Spannkrallen werden angezogen und damit die Höhe und Neigung der Dose 1' eingestellt. Erst danach werden die Abstandsschrauben 72 durch die Einbaudose 1' und in den Dübel 77 eingeschraubt.

Da sich der Dübel 77 über die komplette Aufbauhöhe des Hohlraumbodens 75, 76 erstreckt, erlaubt er eine "Höhenverstellung" der Einbaudose 1', da diese mit beliebigem Abstand zwischen der Auflagefläche 20' des Abdeckabschnitts 19' und dem Hohlraumboden 75, 76 bzw. dem Dübel 77 verschraubbar ist.

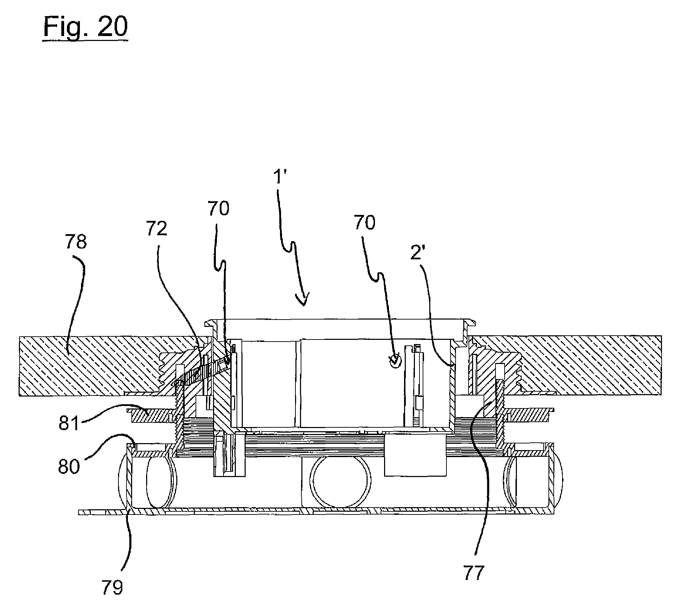

In Figur 20 ist die Einbaudose 1' in einen herkömmlichen Boden mit einem schwimmenden Estrich78 eingebaut. Dazu ist wie zuvor der Dübel 77 in den Nassestrich eingegossen, jedoch sitzt er in der dargestellten Ausführungsform auf einer Klemmdose 79 auf, die ebenfalls in den Estrich eingegossen ist und die eine Kabelzuführung durch entsprechende mit der Klemmdose verbundene Leerrohre in die Einbaudose 1' ermöglicht. Zwischen der Klemmdose 79 und dem Dübel 77 sind falls erforderlich ein oder mehrere, in der dargestellten Ausführungsform zwei, Aufstockelemente 80, 81 vorgesehen, die einen Höhenausgleich zwischen der Oberkante der auf dem Rohboden aufsitzenden Klemmdose 79 und dem Dübel 77 schaffen. In der dargestellten Ausführungsform ist die Klemmdose 79 mit dem ersten Aufstockelement 80, dieses wiederum mit dem zweiten Aufstockelement 81 und das zweite Aufstockelement 81 mit dem Dübel 77 verrastet. Alternativ können die Aufstockelemente auch miteinander verschraubt sein.

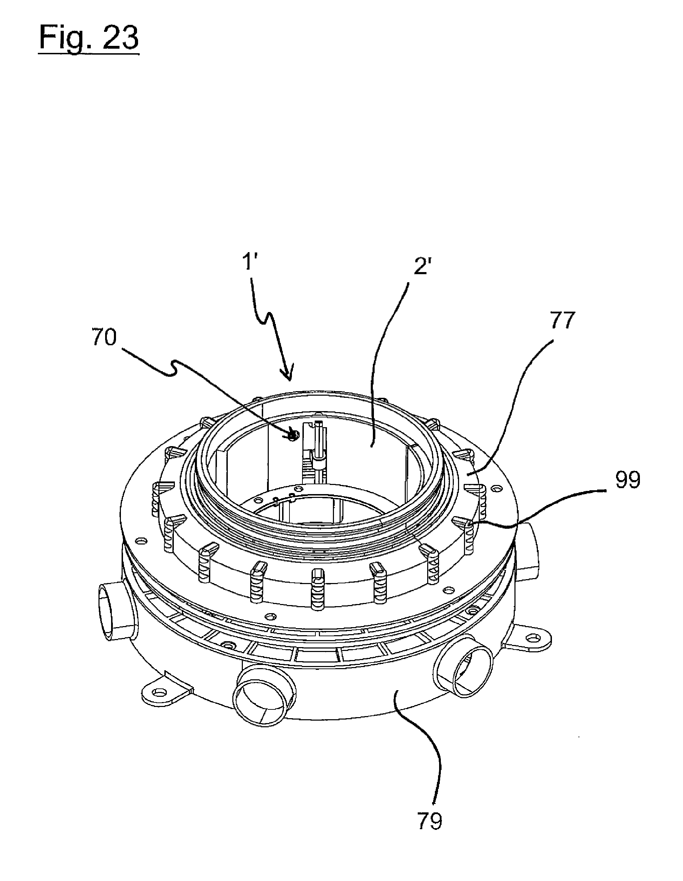

Der Aufbau des Dübels 77 ist besonders deutlich aus der dreidimensionalen Ansicht der Anordnung aus Figur 23 zu erkennen. In dieser Ansicht ist der schwimmende Estrich 78 aus Figur 20 weggelassen, so dass umfänglich angeordnete Verzahnungen 99 auf der Außenseite des Dübels 77 erkennbar sind, mit denen der Dübel mit dem Estrich 78 in Eingriff steht.

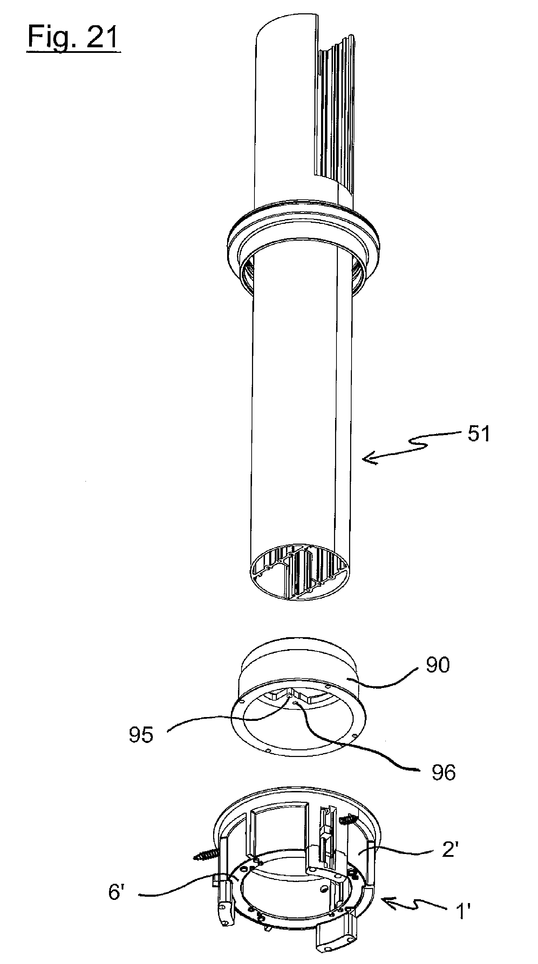

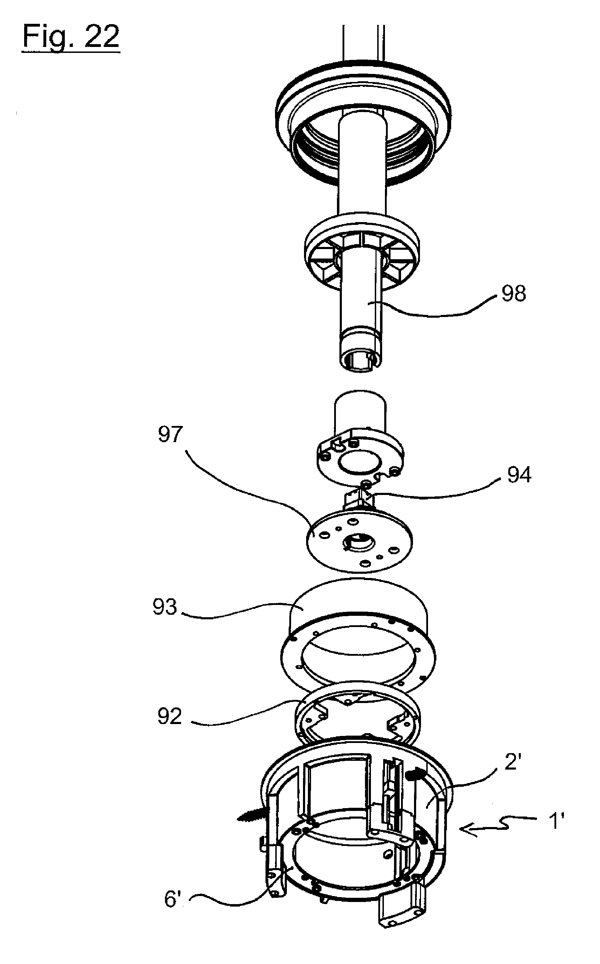

Die Figuren 21 und 22 zeigen alternative Ausführungsformen der Einbaudose 1' aus Figur 18, wobei statt eines mechanischen Verbindungselements 12 mit einem selbstzentrierenden Konus zur einfachen lösbaren Aufnahme einer Energiesäule Montageelemente 90 bzw. 92, 93 mit dem Aufnahmeabschnitt 6' des Gehäuses 2' verbunden sind.

Figur 21 zeigt ein Montagelement 90, das mit dem Unterteil einer Energiesäule 94 mit Hilfe von durch Löcher 95, 96 greifenden Schrauben verschraubbar ist. Das Montageelement 90 wiederum ist mit dem Aufnahmeabschnitt 6' des Gehäuses 2' der Einbaudose 1' verbindbar.

Demgegenüber zeigt Figur 22 die Aufnahme einer Kombination aus zwei Montagelementen 92, 93 auf dem Aufnahmeabschnitt 6 des Gehäuses 2' der Einbaudose 1', um die Einbaudose 1' mit einer Aufnahme 97 für ein selbstkontaktierendes Rohr 98 als Trageelement beispielsweise für eine Stehleuchte, eine Kamera, einen Beamer oder eine Touchpanel, zu verbinden. In der dargestellten Ausführungsform ist die Aufnahme 97 mit einem selbstkontaktierenden elektrischen Konnektor 94 zur Bereitstellung einer elektrischen Verbindung versehen.

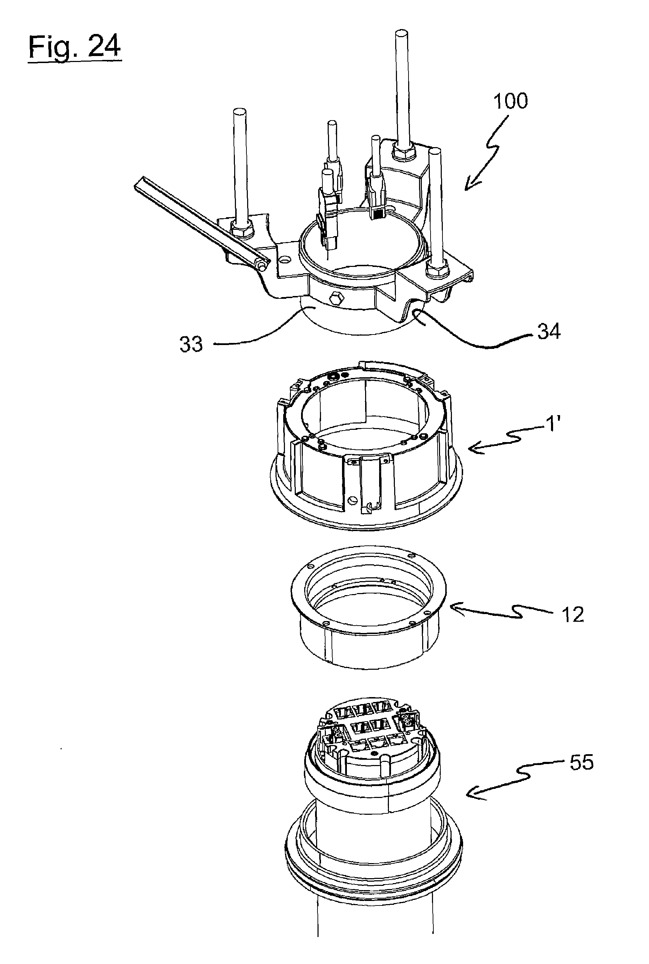

Figur 24 zeigt eine Ausführungsform der Einbaudose 1' zum Einbau in eine abgehängte Decke. Die Dose 1' ist mit einem mechanischen Verbindungselement mit einer konischen Führungsfläche zur selbstzentrierenden Aufnahme einer Energiesäule 55 versehen. Dabei ist das mechanische Verbindungselement so ausgestaltete wie das mechanische Verbindungselement 12 aus Figur 1. Die Energiesäule entspricht im Wesentlichen der Energiesäule 55 aus Figur 8. Eine solche abgehängte Energiesäule kann raumhoch ausgeführt werden und erlaubt die Bestückung mit Steckdosen und Anschlüssen in gewünschter Höhe.

Analog zur Darstellung aus Figur 7 ist in ein Innengewinde des mechanischen Verbindungselements 12 ein Grundrohr 33 mit einem Außengewinde 34 eingeschraubt. An dem Grundrohr 33 ist mit Hilfe eines das Rohr 33 konzentrisch umgebenden Klemmrings eine Abhängung 100 zur Montage der Einbaudose an der Rohdecke eines Gehäuses vorgesehen. Die Abhängung 100 leitet alle auf die Einbaudose 1' einwirkenden Momente direkt in die Rohdecke (nicht gezeigt) ein, während die Einbaudose 1' in die abgehängte Decke (nicht gezeigt) eingelassen ist. Dabei werden wie bei der Installation in einem Doppel- oder Hohlraumboden keine Lasten auf das flächige Konstruktionselement, hier die Deckenplatte, übertragen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1, 1': Einbaudose
- 2, 2': hohlzylindrisches Gehäuse
- 3, 3': Gehäuseaußenwand
- 4, 4': Gehäuseinnenwand
- 5: erstes Ende des Gehäuses
- 6: Aufnahmeabschnitt des Gehäuses
- 7: erste Stirnseite des Gehäuses
- 8 - 11: Schrauben
- 12: mechanisches Verbindungselement
- 13: zweites Ende des Gehäuses
- 14: Dichtungsaufnahme
- 15: zweite Stirnseite des Gehäuses
- 16: ringförmig umlaufende Dichtfläche
- 17: Ausnehmung
- 18: Oberseite des Gehäuses
- 19, 19': Abdeckabschnitt
- 20, 20': Auflagefläche
- 21: Außengewinde
- 22: konische Führungsfläche
- 23: konische Führungsfläche
- 24: Spannkralle
- 25: Spannfläche
- 26, 27: Aufnahme für Spannkrallen
- 28: Standkranz
- 29: Innengewinde
- 30: Sockel
- 31: Stützen
- 32: Träger
- 33: Grundrohr
- 34: Außengewinde
- 35: Führungshülse
- 36: Außenwand
- 37: Führungsnut

- 38: Arretierungsnut
- 39: Deckel
- 40: Führungsabschnitte
- 41: Auslassöffnung
- 42: Distanzelement
- 43: Konnektorenträger
- 44: Stecker bzw. Buchsen
- 45 - 48: Schrauben
- 49: Aufnahmeabschnitt
- 50: Auslassdom
- 51: Energiesäule
- 52: Schukosteckdosen
- 53: Datendosen
- 54: Leuchten
- 55: Energiesäule mit Leuchten
- 56: Führungshülse
- 57: Außenfläche der Hülse 56
- 59: Konnektorenträger
- 60: Distanzelement
- 61: Nut
- 62: Rastnasen
- 63: zweites Führungselement
- 64: Deckel
- 70: Durchgangsbohrungen
- 71: Zylinderachse
- 72: Abstandsschraube
- 73: Doppelbodenplatte
- 74: Oberseite
- 75: Trägerplatte
- 76: Estrich
- 77: Schalungskörper, Dübel
- 78: schwimmender Estrich
- 79: Klemmdose
- 80, 81: Aufstockelemente
- 90, 92, 93: Montagelemente
- 94: Konnektor
- 95, 96: Löcher
- 97: Aufnahme
- 98: Rohr
- 99: Verzahnung
- 100: Abhängung

## Patentansprüche

1. Einbaudose (1, 1') als Auslass für Anschlussleitungen aus einem flächigen Konstruktionselement
mit einem im Wesentlichen hohlzylindrischen Gehäuse (2, 2"), das eine Gehäuseinnenwand (4, 4'), eine Gehäuseaußenwand (3, 3'), ein erstes Ende und ein zweites Ende aufweist,
wobei an der Gehäuseinnenwand (4) ein in radialer Richtung gegenüber der Gehäuseinnenwand (4) nach Innen vorspringender erster Aufnahmeabschnitt (6) zur Aufnahme eines mechanischen Verbindungselements (12) für einen Energieverteiler und/oder eine Führungshülse (35) für einen Deckel (39) vorgesehen ist,
wobei an dem ersten Ende der Einbaudose (1) an der Gehäuseaußenwand (3) ein im Wesentlichen ringförmiger in radialer Richtung gegenüber der Gehäuseaußenwand (3) nach Außen vorspringender Abdeckabschnitt (19) vorgesehen ist, der im eingebauten Zustand der Einbaudose (1) das flächige Konstruktionselement abschnittsweise überdeckt, und
wobei an dem Gehäuse (2) eine Mehrzahl von Aufnahmen (26, 27) für eine Mehrzahl von Spannkrallen (24) vorgesehen sind, mit denen die Einbaudose (1) an einem plattenförmigen Materialabschnitt, in welchem die Einbaudose (1) aufnehmbar ist, festspannbar ist.

2. Einbaudose (1') nach Anspruch 1, **dadurch gekennzeichnet, dass** in dem hohlzylindrischen Gehäuse (2') eine Mehrzahl von sich in radialer Richtung erstreckenden Durchgangsbohrungen (70) zur Aufnahme je einer Befestigungsschraube (72) vorgesehen ist, wobei die Durchgangsbohrungen (72) vorzugsweise einen von 90° verschiedenen Winkel mit der Zylinderachse des Gehäuses (2') einschließen.

3. Kombination aus einer Einbaudose (1') nach Anspruch 2, einem die Einbaudose (2') konzentrisch umgebenden, mit einem flächigen Konstruktionselement (75, 76) verbindbaren Dübel (77) und einer Mehrzahl von Abstandsschrauben (72), welche in die Durchgangsbohrungen (70) des Gehäuses (2') und in den Dübel (77) eingreifen, so dass sie die Einbaudose (1') und den Dübel (77) verschrauben.

4. Kombination nach Anspruch 3, **dadurch gekennzeichnet, dass** der Dübel (77) so ausgestaltet ist, dass er die Aufnahme einer Schraube (72) in einer Mehrzahl von Positionen sowohl in axialer Richtung als auch in Umfangsrichtung ermöglicht.

5. Einbaudose (1) nach einem der Ansprüche 1 bis 4, **dadurch gekennzeichnet, dass** der Durchmesser der Gehäuseaußenwand (3) kleiner als 170 mm, vorzugsweise kleiner als 160 mm und besonders bevorzugt kleiner oder gleich 150 mm ist.

6. Einbaudose (1) nach einem der Ansprüche 1 bis 5, **dadurch gekennzeichnet, dass** der Abdeckabschnitt (19) eine untere Auflagefläche (20) aufweist, die zu dem zweiten Ende des Gehäuses (2) hinzeigt, wobei die Höhe des Gehäuses kleiner ist als 70 mm und bevorzugt 60 mm beträgt und wobei die Höhe zwischen der Stirnseite (15) des Gehäuses (2) an seinem zweiten Ende und der Auflagefläche (20) des Abdeckabschnitts (19) gemessen ist.

7. Einbaudose (1) nach einem der Ansprüche 1 bis 6, **dadurch gekennzeichnet, dass** das Gehäuse (2) eine Deckelaufnahme für einen Verschlussdeckel aufweist, wobei die Deckelaufnahme vorzugsweise eine im Wesentlichen ringförmig umlaufende Nut (61) in der Gehäuseinnenwand (4) zur Aufnahme einer Rastnase (62) ist.

8. Einbaudose (1) nach einem der Ansprüche 1 bis 7, **dadurch gekennzeichnet, dass** sie eine Führungshülse (35, 56) zum Führen und Halten eines Deckels (39) aufweist, wobei die Führungshülse (35, 56) einen im Wesentlichen hohlzylindrischen Körper mit einer Außenwand, einer Innenwand, einem ersten Ende und einem zweiten Ende aufweist, der im Wesentlichen konzentrisch zu der Gehäuseinnenwand (4) der Einbaudose (1) angeordnet ist.

9. Einbaudose (1) nach Anspruch 8, **dadurch gekennzeichnet, dass** in der Außenwand der Führungshülse (35, 56) mindestens eine sich im Wesentlichen parallel zur Zylinderachse erstreckende Führungsnut (37) vorgesehen ist, die am ersten Ende des zylindrischen Körpers der Führungshülse (35, 56) in eine im Wesentlichen in Umfangsrichtung verlaufende Arretierungsnut (38) mündet, so dass ein Führungsabschnitt (40) mit mindestens einem Führungsvorsprung eines zu der Führungshülse (35, 56) komplementären Deckels (39) in der Führungsnut (37) für eine Translationsbewegung in einer Richtung im Wesentlichen parallel zur Zylinderachse und in der Arretierungsnut (38) für eine Verschwenkbewegung um die Zylinderachse führbar ist.

10. Einbaudose (1) nach einem der Ansprüche 1 bis 9, **dadurch gekennzeichnet, dass** der erste Aufnahmeabschnitt (49) mit einem mechanische Verbindungselement (12) zur Aufnahme eines Energieverteilers verbunden ist, wobei das mechanische Verbindungselement (12) so eingerichtet ist, dass es mit einem mit einem Energieverteiler verbundenen komplementären Verbindungselement (23) formschlüssig verbindbar ist,
wobei das mechanische Verbindungselement (12) einen im Wesentlichen hohlzylindrischen Körper mit einer Zylinderaußenwand, einer Zylinderinnenwand, einem ersten und einem zweiten Ende aufweist,
wobei das mechanische Verbindungselement (12) ein erstes Führungselement (22) aufweist, das mit einem mit dem Energieverteiler verbundenen komplementären Führungselement (23) so verbindbar ist, dass bei einem in Eingriffbringen der Führungselemente des Aufnahmeelements und des Energieverteilers das Aufnahmeelement und der Energieverteiler eine definierte vorbestimmte Lage zueinander einnehmen,
wobei das mechanische Verbindungselement zumindest ein erstes Befestigungselement (21) aufweist, das mit einem komplementären Befestigungselement des Energieverteilers so formschlüssig verbindbar ist, dass ein Reibschluss zwischen den Führungsabschnitten des Aufnahmeelements und des Energieverteilers bereitgestellt wird.
wobei das erste Führungselement an dem ersten Ende des Körpers angeordnet ist, während das zweite Ende des Körpers mit dem Aufnahmeabschnitt des Gehäuses (2) verbunden ist und wobei an der Zylinderinnenwand ein in radialer Richtung gegenüber der Zylinderinnenwand nach Innen vorspringender zweiter Aufnahmeabschnitt (49) zur Aufnahme eines Konnektorenträgers (59) oder eines Distanzelements (60) vorgesehen ist.

11. Einbaudose (1) nach Anspruch 10, **dadurch gekennzeichnet, dass** das mechanische Verbindungselement (12) mit einer den hohlzylindrischen Körper zumindest abschnittsweise konzentrisch umgebenden Führungshülse (35, 56) zum Führen und Halten eines Deckels (39) verbunden ist, wobei die Führungshülse (35, 56) einen im Wesentlichen hohlzylindrischen Körper mit einer Außenwand (36), einer Innenwand, einem ersten Ende und einem zweiten Ende aufweist.

12. Einbaudose (1, 1') nach einem der Ansprüche 1 bis 9, **dadurch gekennzeichnet, dass** der erste Aufnahmeabschnitt (6, 6') des Gehäuses (2, 2') mit einem Montageelement (90, 92, 93) für einen Energieverteiler (94, 98) verbunden ist, wobei das Montageelement (90, 92, 93) eine Mehrzahl von Bohrungen (95, 96) zum Verschrauben des Montageelements (90, 92, 93) mit einer Energiesäule aufweist und wobei das Montageelement (90, 92, 93) vorzugsweise einen zweiten Aufnahmeabschnitt aufweist, der mit einem Konnektorenträger oder einem Distanzelement verbindbar ist.

13. Einbaudose (1) nach einem der Ansprüche 1 bis 9, **dadurch gekennzeichnet, dass** der erste Aufnahmeabschnitt (6, 49) mit einer Führungshülse (35, 56) zum Führen und Halten eines Deckels (39) verbunden ist, wobei die Führungshülse (35, 56) einen im Wesentlichen hohlzylindrischen Körper mit einer Außenwand (36), einer Innenwand, einem ersten Ende und einem zweiten Ende aufweist, wobei das zweite Ende mit dem ersten Aufnahmeabschnitt (6, 49) des Gehäuses (2) verbunden ist und wobei vorzugsweise an der Zylinderinnenwand am zweiten Ende des Körpers ein in radialer Richtung gegenüber der Zylinderinnenwand nach Innen vorspringender zweiter Aufnahmeabschnitt (6, 49) vorgesehen ist, der mit einem Konnektorenträger (59) oder einem Distanzelement (60) verbindbar ist.

14. Einbaudose (1) nach einem der Ansprüche 10 bis 13, **dadurch gekennzeichnet, dass** mit dem zweiten Aufnahmeabschnitt (58, 49) der Führungshülse (35, 56) oder des mechanischen Verbindungselements (12) oder des Montageelements (90, 92, 93) ein Konnektorenträger (59, 43) verbunden ist.

15. Einbaudose (1) nach Anspruch 14, **dadurch gekennzeichnet, dass** der Konnektorenträger (43, 59) mindestens ein elektrisches Verbindungselement (44) aufweist, das so eingerichtet ist, dass es mit einem komplementären elektrischen Verbindungselement elektrisch leitend verbindbar ist.
